# EUROPEAN PATENT APPLICATION

(11) **EP 4 353 894 A1**
(43) Date of publication of application: **17.04.2024**
(21) Application number: 22803721.4
(22) Date of filing: 19.04.2022
(51) Int. Cl.: D06F 39/02

(54) **LIQUID GUIDE INSERTION STRUCTURE, ADDITIVE FEEDING MODULE AND LAUNDRY TREATMENT APPARATUS**

(30) Priority: 20.05.2021 CN 202110549148; 20.05.2021 CN 202110553698; 20.05.2021 CN 202110553684; 20.05.2021 CN 202110552798
(71) Applicant: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: HUANG, Tao, Qingdao, Shandong 266101 (CN); CHENG, Baozhen, Qingdao, Shandong 266101 (CN); HUANG, Bencai, Qingdao, Shandong 266101 (CN)
(74) Representative: Beck & Rössig European Patent Attorneys
(86) International application number: PCT/CN2022/087703
(87) International publication number: WO 2022/242396

(57) **Abstract**

A liquid-conducting plug structure, provided on an additive delivery module, which can be inserted into the liquid storage box (1) by a drop port of the liquid storage box (1) to be connected to the additives inside the liquid storage box (1), the liquid-conducting plug structure being provided with a detection device for detecting the category and/or the residual amount of the additives inside the liquid storage box (1). There is also provided an additive delivery module comprising a closed chamber liquid storage box (1) with an internal storage for additives, and an insertion groove for mounting the liquid storage box (1), the insertion groove being provided with the liquid-conducting plug structure. There is also provided a clothing treatment device with the additive delivery module between the clothing treatment device and a tap water connector. Based on the above setup, the category and/or residual amount of additives in the liquid storage box (1) is detected by the detecting device, in order to realize the effect of accurate detection of the category and/or residual amount of additives in the liquid storage box (1).

## Description

### TECHNICAL FIELD

The present disclosure belongs to the technical field of clothing additive delivery, and specifically relates to a fluid-conducting plug structure, an additive delivery module and a clothing treatment device.

### BACKGROUND

With the development of automation technology, home appliances such as clothing treatment equipment are becoming more and more intelligent, and existing washing machines are usually equipped with a clothing additive delivery module, and the existing additive delivery module is usually equipped with a plurality of liquid reservoirs containing a variety of additives such as detergents, fabric softeners, and sanitizers, so as to achieve a more appropriate treatment of clothing made of different materials. In particular, the additive delivery module usually detects the detergents in the reservoirs by adding various markings on the reservoirs to identify the type of additives added by the markings.

The disclosure patent with application number 201810179883 .5 discloses a washing additive automatic placing device comprising a container holding a washing additive and a mounting portion carrying the container, the container being removably disposed within the mounting portion, the device further comprising at least one set of level detecting structures detecting the level of liquid inside the container. The level detecting structure comprises a detecting section, the detecting section being a conducting probe, a conductive section connected to an electric circuit, one end of the detecting section being sealed and inserted into the container, the other end being in contact with the conductive section to conduct the electric circuit when the container is placed in the mounting section, and the conductive section being open to disconnect the electric circuit when the container is removed from the mounting section.

The automatic washing additive dispensing device disclosed in the above application realizes detecting the residual amount of additives in a container by means of an conducting probe provided inside the container holding the washing additives, but the container holding the washing additives (the liquid storage box) is difficult to make and has a high cost, and there are very few detecting or identifying methods in the prior art that are provided on a non-liquid storage box, so that a detecting or identifying technique that is not directly provided on the liquid storage box is now needed. Therefore, there is a need for a detection or identification technology that is not directly mounted on a liquid storage box, thereby reducing the cost and difficulty of producing a liquid storage box.

In view of this the present disclosure is hereby proposed.

### SUMMARY

The technical problem to be solved by the present disclosure is to overcome the deficiencies of the prior art, and provide a liquid-conducting plug structure, an additive delivery module and a clothing treatment equipment, which can not only solve the problem of detecting the type or residual amount of additives in the reservoir box, but also reduce the difficulty of making and the production cost of the reservoir box, by installing a detection device for detecting the category and/or residual amount of additives in the additive delivery module on the liquid-conducting plug structure of the additive delivery module.

In order to solve the above technical problems, the basic idea of the technical solution adopted in the present disclosure is:
A liquid-conducting plug structure,
provided on an additive delivery module, which can be inserted into a liquid storage box by a delivery port of the liquid storage box to communicate with the additives inside the liquid storage box, characterized in that,
the liquid-conducting plug structure is provided with a detecting device for detecting a category and/or residual amount of additives inside the liquid storage box.

Further, the detecting device comprises two conducting probes set on the liquid-conducting plug structure in contact and conduction with the additives in the liquid storage box, and based on conductivity information of the two conducting probes after being energized, the category and/or residual amount of the additives in the liquid storage box are detected.

Further, the liquid-conducting plug structure comprises a liquid-conducting plug tube that can be inserted into the liquid storage box by a drop port of the liquid storage box, and the conducting probes are fixedly disposed on the liquid-conducting plug tube; each of the conducting probes has a probing end for detecting the category and/or residual amount and a wiring end for connecting to an external detection circuit, the probing end of the conducting probes extends into the liquid-conducting plug tube and/or into the liquid storage box; preferably, the conducting probes are embedded in or affixed to an inner wall of the fluid-conducting plug tube.

Further, the liquid-conducting plug tube comprises a liquid-conducting tube section and a plug tube section connected to an end of the liquid-conducting tube section with a reduced outer diameter; an end of the liquid-conducting tube section is connected to the additive delivery module and an other end is connected to the plug tube section, the conducting probe is set in the liquid-conducting tube section with a liquid-conducting channel, and the probing end of the conducting probes is located in the liquid-conducting channel.

Further, the liquid-conducting plug tube comprises a liquid-conducting tube section and a plug tube section connected to the end of the liquid-conducting tube section with a reduced outer diameter; the liquid-conducting tube section extends inwardly curved near a port edge of the plug tube section to form an annular connecting wall attached to the port edge of the plug tube section port; the annular connecting wall is provided with a first through-hole for the probing end of the conducting probes to extend through, and the probing end of the conducting probes extends from the first through-hole to an exterior of the liquid-conducting plug tube in contact with the additive in the liquid storage box; preferably, the annular connecting wall is provided with a number of reinforcing ribs connected between the liquid-conducting tube section and the plug tube section.

Further, at least two conductive contacts are provided on a tube wall of the liquid-conducting plug tube, the wiring end of the conducting probes is connected to the conductive contacts, and the conductive contacts are connected to the external detection circuit; preferably, the conductive contacts are provided outside the tube wall of the liquid-conducting plug tube; or, are embedded in the tube wall of the liquid-conducting plug tube and are at least partially exposed to the tube wall of the liquid-conducting plug tube.

Further, a second through-hole for the wiring end of the conducting probes to pass through is provided on the tube wall of the liquid-conducting plug tube, and the wiring end of the conducting probes extends out from the second through-hole to connect with the external detection circuit; preferably, the liquid-conducting plug structure further comprises a protective cover cylinder connected to a peripheral wall of the liquid-conducting plug tube, the protective cover cylinder is located outside of the conducting probes, and the wiring end at a lower end of the conducting probes extending out of the protective cover cylinder to connect with the external detection circuit;
more preferably, a sealing ring is provided between the second through-hole and the peripheral wall of the conducting probes.

Further, the detecting device further comprises a flow detection mechanism provided on the liquid-conducting plug structure for obtaining flow information of the additives output from the liquid storage box; the category and/or residual amount of additives in the liquid storage box is inferred based on the flow information obtained by the flow detection mechanism; preferably, the liquid-conducting plug structure comprises a liquid-conducting plug tube that can be inserted into the liquid storage box by a drop port of the liquid storage box, the liquid-conducting plug tube has a conduction channel inside, and the flow detection mechanism comprises a flow sensor set inside the conduction channel; preferably, the liquid-conducting plug tube comprises a liquid-conducting tube section and a plug tube section connected to the end of the liquid-conducting tube section with a reduced outer diameter; the flow detection mechanism comprises a flow sensor provided on the peripheral wall of the plug tube section, or on the annular connecting wall between the liquid-conducting tube section and the plug tube section.

Another object of the present disclosure also provides an additive delivery module comprising a liquid storage box with an internal closed chamber for additive storage, and an insertion groove for mounting the liquid storage box, the insertion groove is provided with the liquid-conducting plug structure according to any one of the claims 1-8, and after the liquid storage box is installed into the insertion groove, the liquid-conducting plug structure is inserted to open the drop port of the liquid storage box to realize delivery of additives.

A third object of the present disclosure is to provide a clothing treatment device, the clothing treatment device is provided with the additive delivery module according to claim 9 is provided between the clothing treatment device and a tap water connector.

After adopting the above technical solution, the present disclosure has the following beneficial effects compared with the prior art.

The present disclosure, by providing a detection device for detecting the category and/or residual amount of additives in the liquid storage box on the liquid-conducting plug structure of the additive delivery module, not only solves the problem of recognizing and detecting the category or residual amount of additives, but also reduces the difficulty of making and the cost of making the liquid storage box.

The technical problem to be solved by the present disclosure is to overcome the deficiencies in the prior art, and provide a push-bounce structure and a detergent box assembly, by connecting the upper stage of the push rod with the lower stage of the push rod through an elastic member, and connecting an elastic member to the last stage of the push rod. The plurality of elastic members provide a certain amount of damping, which is able to impede elasticity release, so that the detergent box will not be instantly, and quickly ejected due to excessive elasticity, and the detergent box is ejected with a certain amount of speed, which achieves the purpose of improving the user experience.

In order to solve the above technical problems, the present disclosure adopts the basic concept of the technical solution:
The present disclosure provides a push-bounce structure comprising at least two stages of push rods are set coaxially, an upper stage of the push rod is connected to a lower stage of the push rod by an elastic member, and a last stage of the push rod is connected to the elastic member.

Further, each stage of the push rods is a sleeve-like structure, and the push rods are set nested sequentially from inside to outside;
preferably, one end of the sleeve-like push rod is an open end, and an other end is a closed end, and the upper stage of the push rod is inserted into the lower stage of the push rod via the open end of the lower stage of the push rod.

Further, the upper stage of the push rod and the lower stage of the push rod are connected by a compression spring, the compression spring is provided in the lower stage of the push rod and is connected to the closed end of the upper stage of the push rod and the closed end of the lower stage of the push rod, respectively; preferably, the compression spring is provided coaxially with each stage of the push rod.

Further, a sealed damping chamber is formed between an outer wall of the upper stage of the push rod and an inner wall of the lower stage of the push rod, the damping chamber is filled with a damping fluid.

Further, the open end of a second stage of the push rod is provided with a first rod cap to close the open end, a middle of the first rod cap is provided with a perforation, and a first stage of the push rod is inserted into the second stage of the push rod through the perforation; preferably, an outer wall of the closed end of the first stage of the push rod is projected along a radial direction to form a ring of bosses, an outer periphery of the ring of the bosses is adhered to an inner periphery of the second stage of the push rod, and the damping chamber is separated into two independent damping chambers by the bosses, and a through-hole is provided in an axial direction on the bosses, and the two independent damping chambers are communicated through the through-hole; preferably, the first stage of the push rod is a solid push rod.

Further, an outer peripheral wall of the first stage of the push rod is provided with an oil seal, and an outer periphery of the oil seal is affixed and sealed with the inner peripheral wall of the second stage of the push rod; preferably, the outer wall of the first stage of the push rod is provided with a ring of positioning grooves, and an inner periphery of the oil seal is embedded in the positioning grooves.

Further, both ends of the last stage of the push rod are open ends, and one end of the last stage of the push rod is fastened with a second rod cap capping the open end, and the second rod cap serves as the closed end of the last stage of the push rod, and an inner and outer sides at a bottom of the second rod cap are respectively provided with guiding blocks projecting along an axial direction, and the compression spring is sleeved to the guiding blocks.

Further, an outer wall of each stage of the push rod is provided with a radially projecting slider and an inner wall of each stage of the push rod is provided with a radially recessed slider groove, both the slider and the slider groove extend in the axial direction, and the upper stage of the push rod slidingly connects with the lower stage of the push rod through the slider sliding in the slider groove.

Further, a push rod sleeve is nested outside the last stage of the push rod, one end of the push rod sleeve is an open end and an other end is a closed end, and the last stage of the push rod is inserted into the push rod sleeve via the open end of the push rod sleeve, and the elastic member on the last stage of the push rod is connected to the closed end of the push rod sleeve.

The present disclosure also provides a detergent box assembly comprising a water box and a detergent box mounted inside the water box, the detergent box can be pulled out of the water box and pushed into the water box, and also comprising the push-bounce structure, wherein a telescopic end of a first stage of the push rod abuts against the detergent box, and the elastic member of the last stage of the push rod is connected to a rear sidewall of the water box.

After adopting the above technical solution, the present disclosure has the following beneficial effects compared with the prior art: by connecting the upper stage of the push rod and the lower stage of the push rod through elastic members, and connecting the elastic members to the last stage of the push rod, the plurality of elastic members provide a certain amount of damping, which can impede the release of elastic force, so that the detergent box will not be instantly and quickly ejected due to the excessive elastic force, and so that the detergent box will be ejected at a certain speed, to achieve the purpose of improving the user experience.

The technical problem to be solved by the present disclosure is to overcome the deficiencies in the prior art, and to provide a liquid storage box and a delivery device, so as to improve the service life of the first elastic member by providing a second elastic member between the valve housing and the liquid storage box, so that the second elastic member assists the first elastic member to stretch during the process of the detergent box's pushing and popping of the liquid guide, so as to improve the service life of the first elastic member.

In order to solve the above technical problems, the basic idea of the technical solution adopted in the present disclosure is:
The present disclosure provides a liquid guide structure of a liquid storage box, including a control valve disposed at a drop port of the liquid storage box, the control valve comprises a valve housing, a liquid guide runner formed by hollowing out an interior of the valve housing, a valve core is disposed coaxially within the liquid guide runner, and a first elastic member is disposed between the valve core and the valve housing, characterized in that the valve housing can be mounted telescopically to the liquid storage box by a second elastic member.

Further, the first elastic member is a first compression spring, the second elastic member is a second compression spring, the first compression spring and the second compression spring extend axially along the valve core respectively, and the first compression spring and the second compression spring are coaxially provided or parallel provided; preferably, the first compression spring and the second compression spring, the valve core, and the drop port of the liquid storage box are coaxially provided.

Further, the valve housing is a sleeve-like structure, the valve housing is nested with an outer sleeve coaxial with the valve housing, and the second compression spring is disposed between the valve housing and the outer sleeve; preferably, a sealing ring is disposed outside of both the valve housing and the valve core, and the sealing ring seals with the movement of the valve housing and the valve core.

Further, one end of the outer sleeve and the valve housing axially is an open end and the other end is a closed end respectively, the closed end of the valve housing is inserted into the outer sleeve via the open end of the outer sleeve, and the second compression spring is provided between the closed end of the valve housing and the closed end of the outer sleeve.

Further, the closed end of the valve housing is axially projected to form an annular projection, an inner peripheral wall of the annular projection and the closed end of the valve housing form a guide groove with an opening facing the closed end of the outer sleeve, and one end of the second compression spring is disposed in the guide groove.

Further, the closed end of the outer sleeve is axially projected to form a guide tube with an open end and a closed end, a radial dimension of the guide tube is smaller than a radial dimension of the outer sleeve, the guide tube is connected to the outer sleeve via the open end of the guide tube, and the other end of the second compression spring is inserted into the guide tube via the open end of the guide tube.

Further, a groove-shaped box cover is included, a central part of a groove bottom of the box cover axially projects to form an inner sleeve with open ends, the valve housing is inserted into the inner sleeve through the open end of the inner sleeve, and one end of the inner sleeve is inserted into the outer sleeve through the open end of the outer sleeve.

Further, the outer sleeve is divided into a first section and a second section along a direction from the open end to the closed end of the outer sleeve, an inner wall of the second section projecting inwardly to form a step relative to the inner wall of the first section, and one end of the inner sleeve abuts against the step on the inner wall of the outer sleeve.

Further, the valve housing is provided with a guide port in a lower portion of the valve housing, and the outer sleeve is provided with an opening in a lower portion of the outer sleeve that exposes the guide port, the opening extending from the open end of the outer sleeve to the closed end of the outer sleeve.

The present disclosure also provides a delivery device having at least one insertion groove, the delivery device comprises a liquid storage box mounted in the insertion groove, characterized in that further comprises a liquid-conducting tube and the liquid guide structure according to any one of claims 21-29, one end of the liquid-conducting tube is inserted into the valve housing via the drop port of the liquid storage box in connection with the liquid guide flow channel; preferably, the liquid storage box is mounted on the insertion groove by a push-bounce structure which can be pushed and popped.

After adopting the above technical solution, the present disclosure has the following beneficial effects compared with the prior art. By providing a second elastic member between the valve housing and the liquid storage box, the second elastic member assists the first elastic member to expand and contract during the process of pushing and popping the liquid guide of the detergent box, so as to improve the service life of the first elastic member.

The inventive object of the present disclosure is to provide a liquid guide structure of the liquid storage box that avoids leakage of additives in the liquid-conducting plug unit.

The present disclosure provides a liquid guide structure of a liquid storage box, including a liquid-conducting plug unit, which is inserted with the liquid storage box, and is internally provided with a liquid guide channel for exporting an additive from the liquid storage box; characterized in that the liquid guide channel of the liquid-conducting plug unit is provided with a first check valve for controlling the conductivity or closure thereof. Through the setting of the first check valve, the additives in the liquid-conducting plug unit can be controlled whether to flow out, so as to avoid the additives in the liquid-conducting plug unit from leaking out.

Further, the liquid storage box is equipped with an output channel communicated to outside, and the output channel is provided with a second check valve to control its conduction or closure; the liquid guide channel is communicated with the output channel by plugging, the first check valve and the second check valve are set opposite to each other, the first check valve and the second check valve are abutted to each other and triggered to open, and the first check valve and the second check valve are separated and triggered to close. Through the relative setting of the first check valve and the second check valve, the liquid storage box can make the first check valve and the second check valve offset or separated in the process of movement, and use the first check valve and the second check valve offset or separated from the change in the connection method to adjust the first check valve and the second check valve conduction or closure, and then realize the control of the flow of additives.

Further, the output channel of the liquid storage box is provided with an opening connected to the outside, the liquid guide channel of the liquid-conducting plug unit is inserted into the output channel by the opening, a part of the liquid guide channel inserted into the output channel is provided with a suction port, and the suction port is connected to the output channel; and a first check valve is in offsetting contact with the second check valve through the suction port or is separated from the second check valve. The liquid guide channel of the liquid-conducting plug unit may be inserted into the output channel of the liquid storage box, so that the first check valve and the second check valve may be contacted or separated.

Further, the specific structure of the first check valve and the second check valve is as follows: a first valve core is provided in the first check valve, and a second valve core is provided in the second check valve; the first valve core and the second valve core are provided coaxially and opposite to each other, opposite ends of the first valve core and the second valve core may be offset or separated from each other; in the first check valve, the first valve core is provided with a spring pointing outwardly in its conducting direction, and in the second check valve, the second valve core is provided with a spring pointing outwardly in its conducting direction.

Further, a push pin is provided on the first valve core, the push pin extends in a direction pointing to the second valve core; the push pin of the first valve core abuts and pushes the second valve core; preferably, a plugging groove is provided at a position opposite to the second valve core and the push pin, the push pin is inserted into the plugging groove, and embedded with the plugging groove. The provision of the push pin on the first valve core makes it possible to use the push pin to push the second valve core.

Further, the first valve core is provided as a valve structure having a hollow space inside, and the push pin is embedded in the hollow space of the first valve core. The first valve core may be provided with a hollow structure having a push pin inside, so that the first valve core may be relatively material-saving.

Further, the output channel of the liquid storage box is surrounded by a circular mounting sleeve, an end of the mounting sleeve away from the liquid-conducting plug unit constitutes a shell of the second check valve, the second valve core and the spring are set inside the shell, and the shell is set with a second opening at an end near the liquid-conducting plug unit; the mounting sleeve is set with a hollow inner cavity near the end of the liquid-conducting plug unit, and the first check valve can be correspondingly inserted in the hollow inner cavity; the first valve core can be inserted in the second opening. The second check valve is provided by the mounting sleeve, and the movement of the first check valve is limited by the mounting sleeve.

Further, a mounting groove projecting toward outside of the liquid storage box is provided at the opening of the liquid storage box, and the mounting sleeve is embedded in the mounting groove; a flap bent toward the outside of the mounting groove is provided at an end of the mounting sleeve proximate to the liquid-conducting plug unit, the mounting groove is snap-embedded in a gap between the flap and a body of the mounting sleeve, and the flap extends to a bottom end of the mounting groove proximate to the opening of the liquid storage box. Installation of the mounting sleeve and the liquid storage box is realized by snap-fitting the flap with the mounting groove; and the flap extends long enough to avoid detaching the mounting sleeve from the mounting groove.

Further, the mounting groove is embedded with a liquid guide groove, and the liquid guide groove extends along an axial direction of the liquid storage box; the liquid guide groove comprises an internally hollow mounting cavity, and the mounting sleeve is embedded in the mounting cavity; the liquid guide groove also comprises an internally hollow, additive-guiding flow diversion tube, which is connected to the mounting cavity. The liquid guide groove is provided so that the liquid guide groove defines the flow direction of the additive.

Further, the mounting sleeve is embedded in the mounting cavity, a gap is formed between the mounting cavity and the mounting sleeve, and a guide structure is provided in the gap except for a slot in a middle of the gap where a part of the structure of the first check valve can be embedded; the mounting cavity and the diversion tube are both cavity structures with openings at ends and hollow interiors, and the opening of the mounting cavity near the first check valve is connected to the opening of one end of the diversion tube. The additive may flow out of the mounting sleeve embedded in the mounting cavity and flow into the diversion pipe, ultimately realizing that the additive flows into the liquid storage box according to a set trajectory.

By adopting the above technical solution, the present disclosure has the following beneficial effects compared with the prior art:
(1) The present disclosure realizes the control of whether the additive in the liquid-conducting plug unit can flow out by providing a first check valve in the liquid-conducting plug unit, and avoids leakage of the additive in the liquid-conducting plug unit.
(2) The present disclosure provides the liquid guide structure of the liquid storage box, through the relative settings of the internal first check valve and the second check valve, the first check valve and the second check valve can be open when they are in contact with each other, so the first check valve and the second check valve are controlled to conduction; and when the two are separated from each other, the force disappeared, the first check valve and the second check valve are controlled to be separated. That is, in the present disclosure, through the structure of the first check valve and the second check valve, to realize that in the normal installation of the liquid storage box, the additives can flow to the liquid storage box from the liquid-conducting plug unit; and when the liquid storage box is removed, the additives at the liquid-conducting plug unit will not flow out.
(3) A mounting sleeve is provided in the liquid-conducting structure of the liquid storage box of the present disclosure, a second check valve is provided through the mounting sleeve, and the first check valve can be inserted and embedded in the mounting sleeve. Through the structure of the mounting sleeve, the direction of movement of the first check valve and the second check valve can be limited to ensure that the first check valve and the second check valve can realize the desired movement of contacting and separating from each other. Moreover, the mounting sleeve of the present disclosure is provided with a flap, and the flap is embedded with the mounting groove to realize the fixation of the mounting sleeve and the liquid storage box. The length of the flap is designed to be long enough, i.e. the distance between the flap and the mounting groove is long, so as to avoid detaching the mounting sleeve from the liquid storage box.
(4) The liquid-conducting structure of the liquid storage box of the present disclosure is also provided with a liquid-conducting groove, and the liquid-conducting groove is embedded with a mounting sleeve, which can be supported by the structure of the liquid-conducting groove on the mounting sleeve, and further ensures that the mounting sleeve is embedded in the interior of the liquid storage box. Moreover, a diversion tube is provided in the liquid guide tank, through which the flow direction of the additives flowing into the liquid storage box can be limited to ensure that the additives flow in accordance with a set trajectory.
(5) The present disclosure provides the first check valve, the second check valve specific structure set reasonable, the first valve corevalve core, the second valve corevalve core coaxial, relative setting, so that the first valve corevalve core, the second valve corevalve core contact, the first valve corevalve core, the second valve corevalve core can be mutual open, and then make the first check valve, the second check valve to be open. And accordingly, when the first valve corevalve core and the second valve corevalve core are separated, the force of mutual opening between the first valve corevalve core and the second valve corevalve core disappears, and the first valve corevalve core and the second valve corevalve core are separated from each other under the action of a spring, so that the first check valve and the second check valve are closed.
(6) The first check valve structure of the present disclosure is reasonably designed, has a hollow internal cavity, and the push pin is set in the hollow internal cavity, so that the push rod can be used to push the second check valve. The first check valve has a hollow internal structure, so that the first check valve is designed to save material.

Specific embodiments of the present disclosure are described in further detail below in connection with the accompanying drawings.

### BRIEF DESCRIPTION OF DRAWINGS

The accompanying drawings are used as part of the present disclosure to provide a further understanding of the disclosure, and the schematic embodiments of the disclosure and their illustrations are used to explain the disclosure but do not constitute an undue limitation of the disclosure. Obviously, the accompanying drawings in the following description are only some of the embodiments, and other accompanying drawings may be obtained on the basis of these drawings for a person of ordinary skill in the art without creative labor. In the accompanying drawings:
FIG. 1 is a schematic diagram of the structure of the fluid-conducting plug in an embodiment of the present disclosure;
FIG. 2 is a main view of the fluid-conducting plug structure in an embodiment of the present disclosure;
FIG. 3 is a top view of the fluid-conducting plug structure in an embodiment of the present disclosure;
FIG. 4 is a schematic diagram of the cross sectional structure of FIG. 3 of the embodiment of the present disclosure, A-A;
FIG. 5 is a schematic diagram of the cross-sectional structure of FIG. 3, B-B, of an embodiment of the present disclosure;
FIG. 6 is a schematic diagram of a portion of the structure of an additive delivery module in an embodiment of the present disclosure I;
FIG. 7 is a schematic diagram II of a portion of the structure of an additive delivery module in an embodiment of the present disclosure;
FIG. 8 is a cross-sectional view of a portion of the structure of an additive delivery module in an embodiment of the present disclosure;
FIG. 9 is a schematic diagram of the structure of a detergent box assembly provided in one embodiment of the present disclosure;
FIG. 10 is a schematic diagram of the structure of a detergent box assembly provided in another embodiment of the present disclosure;
FIG. 11 is a schematic structural diagram of a push-bounce structure provided by an embodiment of the present disclosure;
FIG. 12 is an exploded view of a push-bounce structure provided by an embodiment of the present disclosure;
FIG. 13 is a cross-sectional view of a push-bounce structure provided by an embodiment of the present disclosure;
FIG. 14 is a schematic diagram of the structure of a dropping device provided by an embodiment of the present disclosure;
FIG. 15 is a schematic diagram of the structure of a dropping device provided by an embodiment of the present disclosure that is not fitted with a reservoir;
FIG. 16 is a structural schematic diagram of a fluid guide structure of a reservoir provided by an embodiment of the present disclosure;
FIG. 17 is a cross-sectional view of a fluid-conducting structure of a reservoir provided by an embodiment of the present disclosure inserted with a fluid-conducting tube;
FIG. 18 is a cross-sectional view of a fluid-conducting structure of a reservoir provided by an embodiment of the present disclosure that is not inserted with a fluid-conducting tube;
FIG. 19 is a schematic diagram of the structure of an outer sleeve provided by an embodiment of the present disclosure;
FIG. 20 is a schematic diagram of the fluid guide structure of the reservoir of the present disclosure;
FIG. 21 is a schematic diagram of the reservoir box guide structure with push pins of the present disclosure;
FIG. 22 is a schematic diagram of the present disclosure in which the fluid-conducting insertion unit, and the reservoir box are split;
FIG. 23 is a schematic diagram of a delivery device of the present disclosure.

In the figure: 1-liquid storage box; 2-liquid-conducting plug tube; 21-liquid-conducting tube section; 22-plug tube section; 23-reinforcing rib; 24-conducting probe; 241-probing end; 242-wiring end; 25-annular connecting wall; 26-protective cover cylinder; 27-conduction channel; 28-liquid-conducting port; 3-sealing cap.

501-push-bounce structure; 502-push rod; 521-inner push rod; 5211-boss; 2111-through-hole; 522-middle push rod; 221-first projection; 523-outer push rod; 231-second projection; 503-first compression spring; 504-second compression spring; 505-third compression spring; 506-push rod sleeve; 507-slider; 71-first slider ; 72-second slider; 508-slider groove; 81-first slider groove; 82-second slider groove; 509-damping chamber; 510-runner; 511-oil seal; 512-positioning groove; 513-first rod cap; 5131-first opening; 514-second rod cap; 5141-second opening; 5142- first guide block; 5143-second guide block; 515- water box; 516-detergent box.

301-liquid guide structure; 11-control valve; 111-valve housing; 112-liquid guide runner; 113-first elastic member; 114-annular projection; 115-guide groove; 116-guide port; 117-sealing ting; 12-liquid-conducting tube; 13-valve core; 14-second elastic member; 504-second compression spring; 15-stop structure; 151-outer sleeve; 152- guide tube; 153-first section; 154-second section; 155-step; 156-opening; 16-box cover; 17-inner sleeve; 302-insertion groove; 1-liquid storage box; 31-drop port.

1-liquid storage box; 402-second check valve; 403-liquid-conducting plug unit; 404-first check valve; 405-mounting groove; 406-mounting sleeve; 407-hollow inner cavity; 408-flap; 409-limiting projection; 117 -sealing ring; 411-guide flow groove; 412-diversion tube; 413-gap; 414-second valve core; 415-first valve core; 416-push pin; 417-opening; 418-suction port; 419-plugging groove; 420-second opening.

It is to be noted that these accompanying drawings and textual descriptions are not intended to limit in any way the scope of the present disclosure as conceived, but rather to illustrate the concepts of the disclosure for those skilled in the art by reference to particular embodiments.

### DETAILED DESCRIPTION

In order to make the objects, technical solutions and advantages of the embodiments of the present disclosure clearer, the technical solutions in the embodiments will be described clearly and completely in the following in conjunction with the accompanying drawings in the embodiments of the present disclosure, and the following embodiments are used to illustrate the present disclosure but are not used to limit the scope of the present disclosure.

In the description of the present disclosure, it is to be noted that the terms "top", "bottom", "front", "back", "left", "right", "vertical", "horizontal", "inner", "outside" and the like indicate orientations or positional relationships based on those shown in the accompanying drawings, and are intended only to facilitate the description of the present disclosure and to simplify the description, and are not intended to indicate or imply that the device or element referred to must have a particular orientation, be constructed and operated with a particular orientation, and therefore are not to be construed as a limitation of the present disclosure.

In the description of the present disclosure, it is to be noted that, unless otherwise expressly specified and limited, the terms "mounted", "connected", "connected" are to be understood in a broad sense, e.g., as fixed, removable or integrally connected; mechanically connected or electrically connected; directly connected or indirectly connected through an intermediary medium. For example, it may be fixed, removable, or integrally connected; it may be mechanically connected or electrically connected; it may be directly connected or indirectly connected through an intermediate medium. For a person of ordinary skill in the art, the specific meaning of the above terms in the present disclosure may be understood in a specific context.

The disclosure is described in further detail below in connection with embodiments.

### Embodiment 1

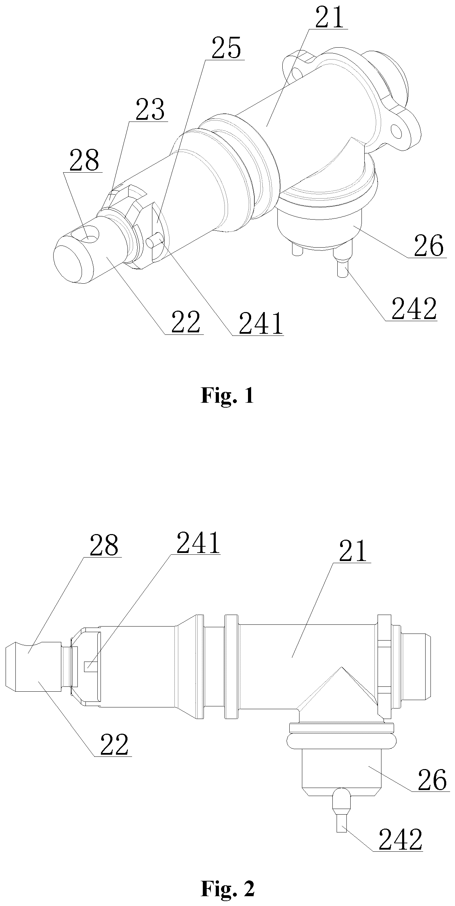

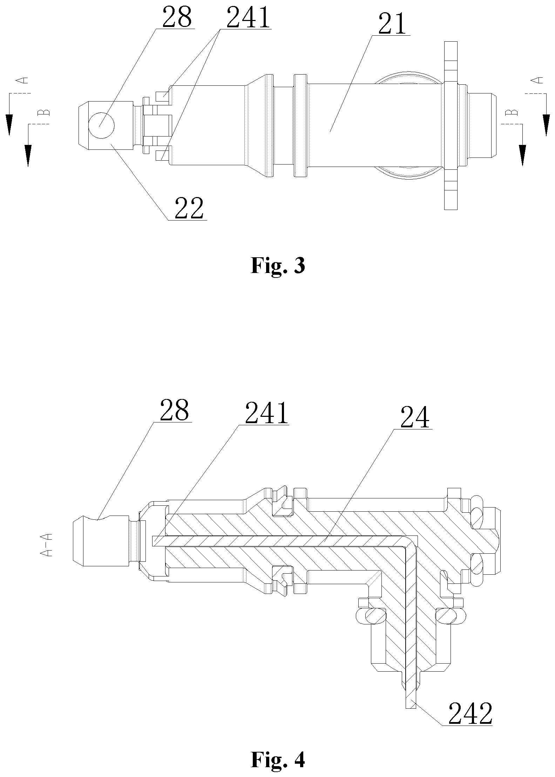

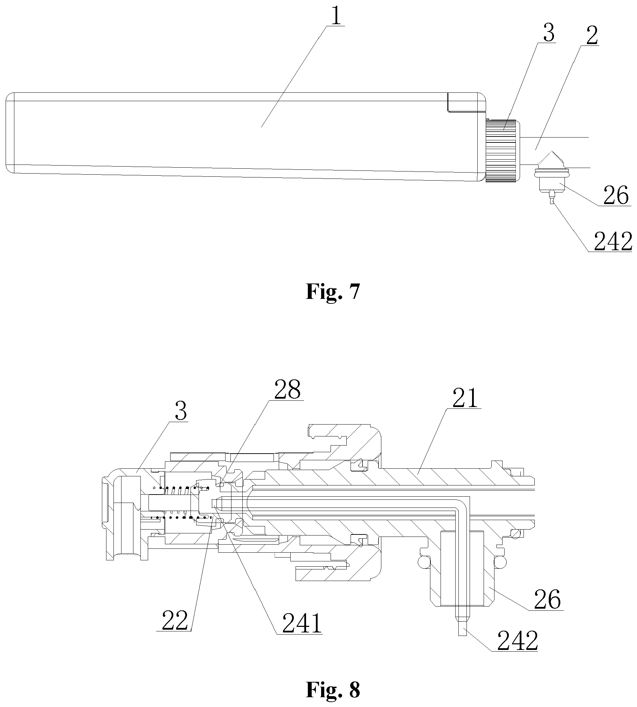

As shown in FIGS. 1 to 8, the present disclosure provides a liquid-conducting plug structure, provided on an additive delivery module, which can be inserted by a delivery port of the liquid storage box 1 into the liquid storage box 1 in connection with the additives inside thereof, wherein the liquid-conducting plug structure is provided with a detecting device for detecting the category and/or the residual amount of additives in the liquid storage box 1.

As shown in FIGS. 1 to 5, the present embodiment provides a liquid-conducting plug structure, and two conducting probes 24 which in contact and in conduction with additives in the liquid storage box 1 are provided on the liquid-conducting plug structure. The category and/or residual amount of the additives in the liquid storage box 1 is inferred based on the conductivity information of the two conducting probes 24 after being energized.

Specifically, the liquid-conducting plug structure comprises a liquid-conducting plug tube 2 that can be inserted into the liquid storage box 1 by a drop port of the liquid storage box 1, and the conducting probes 24 are fixedly disposed on the liquid-conducting plug tube 2conducting probe. One end of the conducting probe 24 is a probing end 241 for detecting category and/or residual quantity, the other end is a wiring end 242 connected to an external detection circuit, the probing end 241 of the conducting probe 24 extends into the liquid-conducting plug tube 2 and/or into the liquid storage box 1. Preferably, the conducting probe 24 is embedded or affixed and fixed to the inner wall of the liquid-conducting plug tube 2.

Wherein, two conducting probes 24 are provided at a certain distance apart, and when the probing end 241 is in contact with the additive, the two energized conducting probes 24 form a closed circuit with the additive, and since different types of additives have different conductivity, the category of the additive in the liquid storage box 1 is inferred through the detection of the conductivity.

When the residual amount of additives in the liquid storage box 1 is insufficient, at least one of the two conducting probes 24 cannot contact the additives, i.e., it cannot form a stable closed circuit, and at this time, the conductivity is zero, so that it can be deduced that there is insufficient residual amount of additives in the liquid storage box 1.

Further, the liquid-conducting plug tube 2 includes a liquid-conducting tube section 21 and a plug tube section 22 with a reduced outer diameter connected to an end of the liquid-conducting tube section 21. A liquid-conducting port 28 is provided in a side wall of the plug tube section 22, and the additive flowing into the liquid-conducting plug tube 2 through the liquid-conducting port 28.

In one embodiment of the present embodiment, one end of the liquid-conducting tube section 21 is connected to the additive delivery module, and the other end is connected to the plug tube section 22, and the conducting probe 24 is set inside the liquid-conducting tube section 21. The liquid-conducting tube section 21 has a conduction channel 27, and the probing end 241 of the conducting probe 24 is located inside the conduction channel 27. Preferably, the probing ends 241 of the two conducting probes 24 are disposed at the radially farthest ends of the conduction channel 27, which can effectively prevent misjudgment due to the two conducting probes 24 and the residual additives at the bottom of the conduction channel 27 form a closed circuit. More preferably, the two conducting probes 24 are embedded in the tube wall of the liquid-conducting plug tube 2, wherein the probing ends 241 are flush with the inner wall of the liquid-conducting plug tube 2, which is able to better prevent the residue of the additive in the in the liquid-conducting plug tube 2 and enhance the durability of the liquid-conducting plug tube 2.

In another embodiment of the present embodiment, the end edge of the liquid-conducting tube section 21 near the plug tube section 22 is bent inwardly to form an annular connecting wall 25 connected to the circumferential edge of the plug tube section 22. Preferably, the annular connecting wall 25 is provided with a number of reinforcing ribs 23 connected between the liquid-conducting tube section 21 and the plug tube section 22, and the setting of the reinforcing ribs 23 enables a more stable connection between the liquid-conducting tube section 21 and the plug tube section 22. The annular connecting wall 25 is provided with a first through-hole for the probing end 241 of the conducting probe 24 to extend out, and the probing end 241 of the conducting probe 24 extends out from the first through-hole to the outside of the liquid-conducting plug tube 2 to come into contact with additives in the liquid storage box 1.

Further, the conducting probe 24 is wrapped with a protective layer made of rubber, which can fill the gap between the conducting probe 24 and the first through-hole while playing a protective role for the conducting probe 24, so that the connection between the conducting probe 24 and the liquid-conducting plug tube 2 is more stable. Preferably, the two conducting probes 24 are provided on both sides of the reinforcing rib 23, and through the partitioning effect of the reinforcing rib 23, it is possible to prevent the occurrence of misjudgment due to the spacing distance of the conducting probes 24 being too short, resulting in a small amount of additives being left between the two conducting probes 24 to form a closed circuit, thus the accuracy of the detection device is improved. At least two conductive contacts are provided on the tube wall of the liquid-conducting plug tube 2, the wiring end 242 of the conducting probe 24 is connected to the conductive contacts, and the conductive contacts are connected to the external detection circuit. Preferably, the conductive contacts are set outside the tube wall of the liquid-conducting plug tube 2; or, embedded in the tube wall of the liquid-conducting plug tube 2, at least partially exposed in the tube wall of the liquid-conducting plug tube 2. The setting of the conductive contacts enable the conducting probe 24 to better transmit the detected signals to the external detection circuit, and when the conducting probe 24 fails, it can be more conveniently disassembled and replaced, enhancing the practicality of the liquid-conducting plug structure.

In another preferred embodiment of the present embodiment, the wiring end 242 of the conducting probe 24 directly constitutes a conductive contact plate, which is connected to the external detection circuit, with stronger structural integration and a more reasonable layout. The conductive plug tube 2 is provided with a second through-hole on the tube wall for the wiring end 242 of the conducting probe 24 to pass through, and the wiring end 242 of the conducting probe 24 extends out through the second through-hole to be connected with the external detection circuit Preferably, the liquid-conducting plug structure further comprises a protective cover cylinder 26 connected to the outer peripheral wall of the conductive plug tube 2, and the protective cover cylinder 26 is located outside the conducting probe 24, and the wiring end 242 at the lower end of the conducting probe 24 extends out of the protective cover cylinder 26 to be connected to an external detection circuit. More preferably, the first through-hole and second through-hole are communicated in the tube wall of the liquid-conducting plug tube 2, and the probing end 241 of the conducting probe 24 extends out of the first through-hole, and wiring end 242 extends out of the second through-hole. The setting of the first through-hole and the second through-hole makes the installation of the conducting probe 24 on the liquid-conducting plug tube 2 simpler and more convenient, and effectively enhances the productivity of the liquid-conducting plug structure. Further, a sealing ring is provided between the first through-hole and second through-hole and the circumferential wall of the conducting probe 24. With the above setup, information on the type and/or residual amount of additives in the liquid storage box 1 can be derived by directly detecting the contacted additives through the conducting probe 24, without the need for special labeling on the device such as the liquid storage box 1, which reduces the difficulty of production and the production cost of the consumables such as the liquid storage box 1.

### Embodiment 2

The present embodiment provides a liquid-conducting plug structure with a flow detection mechanism, wherein the category and/or residual amount of additives within the liquid storage box 1 is inferred based on the flow information obtained by the flow detection mechanism. Preferably, the liquid-conducting plug structure comprises a liquid-conducting plug tube 2 which can be inserted into the liquid storage box 1 by the drop port of the liquid storage box 1, the liquid-conducting plug tube 2 is provided with a conduction channel 27 within the liquid-conducting plug tube 2, and the flow detection mechanism comprising a flow sensor provided in the conduction channel 27. Preferably, the liquid-conducting plug tube 2 comprises a liquid-conducting tube section 21 and a plug tube section 22 connected to a reduced outer diameter of the end of the liquid-conducting tube section 21. The flow detecting mechanism comprises a flow sensor provided on an outer peripheral wall of the plug tube section 22, or on an annular connecting wall 25 between the liquid-conducting tube section 21 and the plug tube section 22.

Specifically, in order to detect the category of additives, for example, under the condition that the external conditions remain unchanged, the category matching table is obtained by adding different kinds of additives several times to obtain the flow sensor speed ranges corresponding to various additives. The additives on the market generally include detergents, softeners, and sanitizers, wherein the viscosity of the detergent is the largest, the viscosity of the softener is the second largest, and the viscosity of the sanitizer is the smallest, and under the same external conditions, the rotational speed detected by the flow sensor is the smallest when the additive is a detergent, and the rotational speed detected by the flow sensor is the largest when the additive is a sanitizer.

For example, in the category matching table, the rotational speed range corresponding to detergents is in the range of N1-N2, the rotational speed range of the flowmeter corresponding to softeners is in the range of N3-N4, and the rotational speed range of the flowmeter corresponding to sanitizers is in the range of N5-N6, wherein N1 < N2 < N3 ≤ N4 ≤ N5 ≤ N6. In the event that the external conditions remain unchanged, the additive can be identified to be a detergent/softener/sanitizer.

When the flow sensor detects the residual amount of additives, under the same external conditions, the flow rate of the less viscous fluid such as air or water is faster, and the corresponding flow sensor detects a larger rotation speed; when the more viscous additives flow through, the corresponding flow sensor detects a smaller rotation speed.

Since the additives flow through the flow sensor at a slower rate compared to the air flow rate, whether the additives are added or not can be determined by comparing the rotational speeds of the flow sensors, and when the rotational speeds detected by the flow sensors are larger, it can be deduced that the residual amount of the additives is smaller. Specifically, by repeatedly adding the additive at different residual amounts, a residual matching table of the rotational speed range corresponding to the flow sensor at different residual amounts can be obtained. As the additive flows through the flow sensor, the flow sensor detects the rotational speed in real time or at certain intervals, and when the detected rotational speed is greater than the rotational speed corresponding to the lowest residual quantity in the residual quantity matching table, it is inferred that the residual quantity of the additive is insufficient.

### Embodiment 3

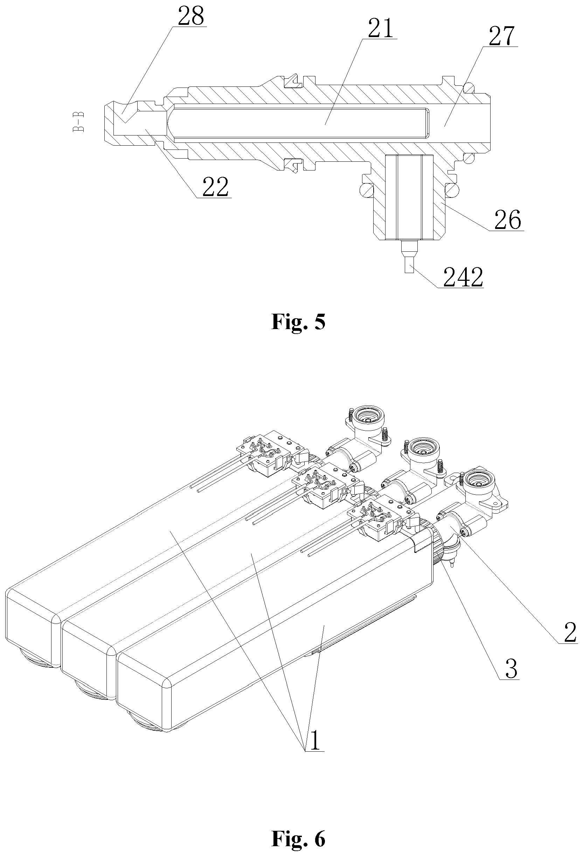

As shown in FIGS. 6 to 8, the present embodiment provides an additive delivery module, comprising a liquid storage box 1 with an internal storage for additives, an plugging groove for the installation of the liquid storage box 1, and a liquid-conducting plug structure as described in the above embodiment. After the liquid storage box 1 is installed into the plugging groove, the liquid-conducting plug structure is inserted plugging groove to open a drop port of the liquid storage box 1, thereby realizing the delivery of additives. Preferably, the liquid storage box 1 is a cartridge-type liquid storage box 1, a sealing cap 3 is installed at the drop port of the liquid storage box 1, which is normally closed, and the liquid-conducting plug structure is inserted into the sealing cap 3 to open the drop port, and the additives are exported out through the liquid-conducting plug tube 2.

Specifically, when the plug tube section 22 is inserted into the sealing cap 3, the annular connecting wall 25 and the sealing cap 3 form a chamber for additive circulating, and a detection device disposed on the annular connecting wall 25 detects the additive within the chamber, and deduces the type and/or residual amount of the additive by means of a feedback signal obtained from the detection. Further, the additive delivery module is provided with a suction device, the suction device being connected to the liquid storage box 1 by means of a liquid-conducting plug tube 2, which, under the action of a suction pump, conducts the additives out of the liquid storage box 1.

### Embodiment 4

This embodiment provides, as a further limitation of all the foregoing embodiments, a clothing treatment apparatus, the clothing treatment apparatus being provided with an additive delivery module as described in the above embodiment between the clothing treatment apparatus and a tap water connector, and automatic delivery of additives being realized by the additive delivery module.

### Embodiment 5

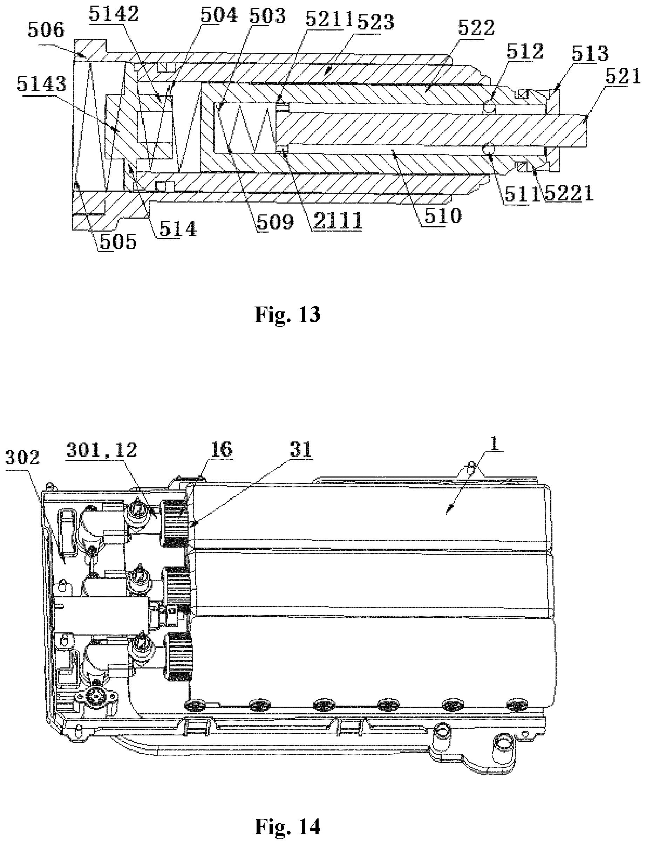

As shown in FIG. 13, the present disclosure provides a push-bounce structure comprising at least two stages of push rods 502 provided coaxially, wherein the upper stage of the push rods is connected to the lower stage of the push rods by an elastic member, and wherein the last stage of the push rod is connected to the elastic member.

In the embodiment of the present disclosure, by connecting the upper push rod to the lower push rod through the elastic member, and connecting the elastic member to the last push rod, the plurality of elastic members provide a certain amount of damping, which is able to impede the release of the elastic force, so that the detergent box 516 will not be instantly, and quickly ejected due to the excessive elastic force, and so that the detergent box 516 is ejected with a certain amount of speed, so as to improve the user experience.

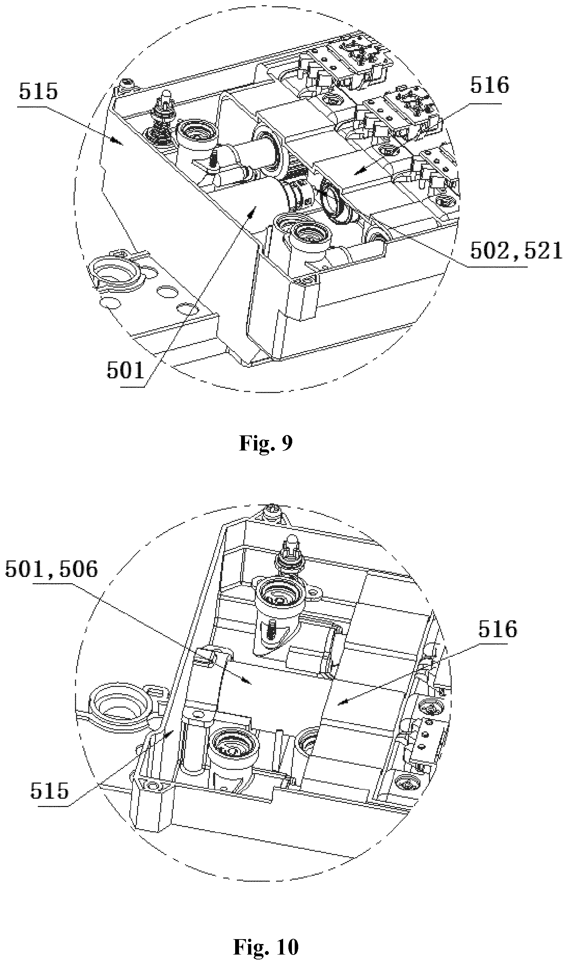

As shown in FIGS. 9 and 10, the push-bounce structure 501 is used in a washing machine, and the washing machine may be a drum washing machine or a pulstor washing machine, the detergent water box assembly includes a water box and a detergent box 516 mounted inside the water box, and the detergent box 516 may be pulled outside the water box and pushed inside the water box. The telescoping end of the first-stage push rod abuts against the detergent box 516, and the elastic member of the last-stage push rod is connected with the rear side wall of the water box. When the push-bounce structure 501 includes two push rods, an elastic member is provided between the two push rods, and an elastic member is provided between one push rod and the inner wall of the water box. All of the push rods can be telescopically moved in the axial direction and telescopically moved in the same direction.

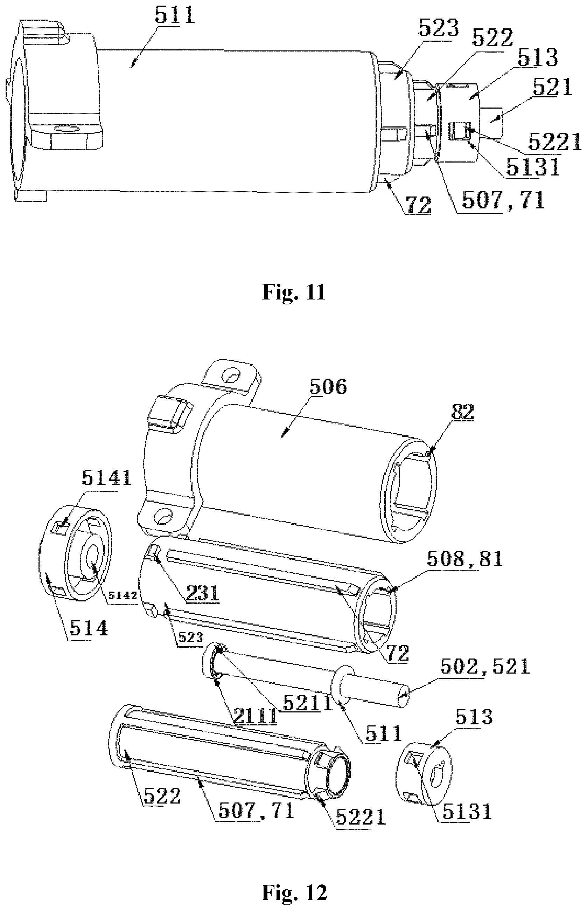

As shown in FIGS. 11 and 13, in an embodiment of the present disclosure, all push rods 502 are hollow push rods and the push rods are of a sleeve structure; or one push rod 502 is a solid push rod, the remaining push rods 502 are hollow push rods, and the remaining push rods are of a sleeve structure; and all push rods 502 are provided in nested sets in order from inside to outside.

In the embodiment of the present disclosure, all push rods 502 are hollow push rods, all push rods 502 are sequentially nested from the inside to the outside, and the innermost push rod is a hollow push rod. Alternatively, one push rod of all push rods 502 is a solid push rod, and the rest of the push rods are hollow push rods, and all push rods 502 are sequentially nested from the inside to the outside, with the innermost push rod being a solid push rod for the first stage push rod. Specifically, one end of the hollow push rod is an open end and the other end is a closed end, in the nested set of two push rods, the upper level push rod is inserted into the lower level push rod through the open end of the lower level push rod, and the remaining portion of the upper level push rod is exposed to the lower level push rod, which is used to be pressed against the outside of the detergent box 516, so as to realize that the detergent box 516 is successively pressed against the retracted end of the plurality of push rods when the various push rods are compressed, and to improve the smoothness of the detergent box 516 when it is pushed into the water box. When each push rod is extended, the telescopic end of the plurality of push rods gradually extends successively, slowly releasing the elastic force and reducing the speed at which the detergent box 516 is ejected.

As shown in FIGS. 11 and 13, in the embodiment of the present disclosure, the last stage push rod has a push rod sleeve 506 nested outside the last stage push rod, and an elastic member is provided between the last stage push rod and the push rod sleeve 506.

In the embodiment of the present disclosure, in order to realize the stability of the expansion and contraction of a number of push rods and the stability of the push rods in the water box, there is a push rod sleeve 506 nested outside the last level of push rods, with one end of the push rod sleeve 506 being an open end and the other end being a closed end, and at least a portion of the last level of push rods is inserted into the push rod sleeve 506 via the open end of the push rod sleeve 506. The water box is in the form of a square shape, and the push rod sleeve 506 is fixed to the inner wall of the water box on the water box, specifically, the outer periphery of the push rod sleeve 506 is provided with a first bump and a second bump that are parallel to the bottom wall of the water box, the first bump and the second bump are set opposite each other on both sides of the push rod sleeve 506, and the first bump and the second bump are provided with mounting holes that are used for connecting with the bottom wall of the water box; the two ends of the push rod sleeve 506 are both open-ended, and one end of the push rod is affixed with a backside wall of the water box, and the backside wall of the water box serves as a closed end of the push rod sleeve 506.

As shown in FIGS. 12 and 13, specifically, the push-bounce structure 501 includes an inner push rod 521, a middle push rod 522, and an outer push rod 523, the inner push rod 521 is a solid rod, the inner push rod 521 is a first-stage push rod, the middle push rod 522 and the outer push rod 523 are internally hollow and have an open end at one end and a closed end at the other end. The middle push rod 522 is the second stage push rod and the outer push rod 523 is the last stage push rod, the inner push rod 521 is inserted into the middle push rod 522 via the open end portion of the middle push rod 522, and the middle push rod 522 is inserted into the outer push rod 523 via the open end portion of the outer push rod 523; and the outer push rod 523 is inserted into the push rod sleeve 506 via the open end portion of the push rod sleeve 506.

As shown in FIG. 13, in an embodiment of the present disclosure, the upper push rod and the lower push rod are connected by a compression spring, which is provided in the lower push rod and is connected to the closed end of the upper push rod and the closed end of the lower push rod, respectively.

In an embodiment of the present disclosure, a compression spring is provided in the lower stage of the push rod, one end of the compression spring is connected to the inner wall of the closed end of the lower stage of the push rod, and the other end of the compression spring is connected to the outer wall of the closed end of the upper stage of the push rod.

Further, a compression spring is provided between the last stage push rod and the push rod sleeve 506, the compression spring is provided in the push rod sleeve 506, and the compression spring is connected to the closed end of the last stage push rod and the closed end of the push rod sleeve 506, respectively. The compression spring is provided in the push rod sleeve 506, one end of the compression spring is connected to the inner wall of the closed end of the push rod sleeve 506, the other end of the compression spring is connected to the outer wall of the closed end of the last stage push rod. It is to be noted that if the push rod sleeve 506 itself is closed at one end and open at the other end, the compression spring is connected to the push rod sleeve 506, and if the rear sidewall of the water box is the closed end of the push rod sleeve 506, the compression spring is connected to the rear sidewall of the water box.

Specifically, one end of the inner push rod 521 is connected to the inner side of the closed end of the middle push rod 522 via the first compression spring 503; the outer side of the closed end of the middle push rod 522 is connected to the inner side of the closed end of the outer push rod 23 via the second compression spring 504; and the outer side of the closed end of the outer push rod 23 is connected to the inner side of the closed end of the push rod sleeve 6 push rod sleeve 506 via the third compression spring 5 third compression spring 505.

When compressed, the telescopic end of the inner push rod 521 is pushed against the detergent box 516, the detergent box 516 is pushed, the inner push rod 521 is moved backward, the first compression spring 503 is compressed, and subsequently the telescopic end of the middle push rod 522 is pushed against the detergent box 516, and the middle push rod 522 is moved backward along with the inner push rod 521. The second compression spring 504 is compressed, and subsequently the telescopic end of the outer push rod 523 abuts against the detergent box 516, the outer push rod 523 moves backward along with the middle push rod 522. The third compression spring 505 compresses, and the plurality of compression springs successively compresses, the detergent box 516 is cushioned, so that it improves the stability of the detergent box 516 being pushed in.

When released, the first compression spring 503, the second compression spring 504, and the third compression spring 505 are gradually released, and the plurality of compression springs provide a certain amount of damping, which is able to impede the release of the elastic force of the push-bounce structure 501, so that the detergent box 516 will not be instantly, and quickly ejected due to the elastic force being too large, so that the detergent box 516 is ejected with a certain speed, enhancing the user experience.

Specifically, the first compression spring 503, the second compression spring 504 and the third compression spring 505 extend axially and are coaxially provided.

As shown in FIG. 12, in an embodiment of the present disclosure, each stage of the push rod is provided with a radially projecting slider 507 on the outer wall of the push rod, and a radially recessed slider groove 508 on the inner wall thereof, and both the slider 507 and the slider groove 508 extend in an axial direction, and the upper stage of the push rod is slidably connected to the lower stage of the push rod by sliding of the slider 507 within the slider groove 508.

In the embodiment of the present disclosure, the two push rods nested in each other are slidingly connected, so that the push rods make the action of telescopic movement more smoothly; the inner wall of the push rod sleeve 506 is provided with a sliding groove that extends along the axial direction and is radially recessed, and the last level of the push rods and the push rod sleeve 506 are connected by the sliding of the slider 507 inside the slider groove 508.

For example, the outer wall of the middle push rod 522 is provided with a first slider 71 that extends in the axial direction and is radially convex, the inner wall of the outer push rod 523 is provided with a first slider groove 81 that extends in the axial direction and is radially recessed. The first slider 71 slides inside the first slider groove 81; the outer wall of the outer push rod 523 is provided with a second slider 72 that extends in the axial direction and is radially convex, and the inner wall of the push rod sleeve 506 is provided with an axially extending, radially recessed second slider groove 82, the second slider 72 slides in the second slider groove 82, the first sliding groove 81 has a guiding effect on the sliding of the first slider 71 and the second slider groove 82 has a guiding effect on the sliding of the second slider 72. The first slider 71 extends from one end of the middle push rod 522 to the other end, the second slider 72 extends from one end of the outer push rod 523 extends from one end of the outer push rod 523 to the other end.

As shown in FIGS. 12 and 13, in an embodiment of the present disclosure, the outer wall of the closed end of the first stage push rod projects radially to form a circle of bosses 5211, the outer periphery of the bosses 5211 disposed in a circle is affixed to the inner peripheral wall of the second stage push rod and slides axially on the inner peripheral wall of the second stage push rod.

In embodiments of the present disclosure, the boss 5211 slides on the inner peripheral wall of the second stage push rod, and the outer periphery of the boss 5211 is affixed to the inner peripheral wall of the second stage push rod, allowing the first stage push rod to slide more smoothly within the second stage push rod, e.g., the inner push rod 521 forms a ring of bosses 5211 on the inner push rod 521, and the outer periphery of the bosses 5211 provided in a ring abuts an inner peripheral wall of the middle push rod 522.

As shown in FIG. 13, the boss separates the damping chamber into two mutually independent damping chambers, specifically, the inner peripheral wall of the second stage push rod and the boss 5211 form a damping chamber 509 filled with damping fluid, and the boss 5211 is provided with a through-hole 2111. The outer peripheral wall of the first stage push rod, the inner peripheral wall of the second stage push rod and the boss 5211 form another damping chamber filled with damping fluid, which serves as a runner 510, with one end of the runner 510 sealed and the other end connected to the damping chamber 509 via the through-hole 2111. For example, the boss 5211 separates the interior of the middle push rod 522 into two damping chambers, with one damping chamber 509 being formed by the interior peripheral walls of the middle push rod 522 and the boss 5211, and is filled with damping fluid; and another damping chamber formed by the outer peripheral wall of the inner push rod 521, the inner peripheral wall of the middle push rod 522, and the boss 5211, which is the runner 510, and since the boss 5211 is provided with through-hole 2111, the damping fluid can circulate between the damping chamber 509 and the runner 510, realizing a role of having an obstruction to the compression and extension of the push rod, and being able to further impede the release of the elastic force of the push-bounce structure 501.

As shown in FIGS. 12 and 13, in an embodiment of the present disclosure, an oil seal 511 is provided over the outer peripheral wall of the first stage push rod, and the outer periphery of the oil seal 511 is affixed and sealed to the inner peripheral wall of the second stage push rod.

In an embodiment of the present disclosure, in order to increase the sealing of the damping chamber 509, an oil seal 511 is provided at the end of the runner 510 away from the damping chamber 509, the oil seal 511 is socketed to the outer peripheral wall of the first stage push rod and is tightly adhered to the inner peripheral wall of the second stage push rod to realize the sealing, e.g., the inner push rod 521 is provided with an oil seal 511 on the outer peripheral wall of the inner push rod 521, and the outer periphery of the oil seal 511 is sealing in close fit with the inner peripheral wall of the middle push rod 522.

Specifically, the peripheral wall of the second stage push rod is provided with a ring of positioning recesses 512, and the inner periphery of the oil seal 511 is embedded in the positioning recesses 512, and the positioning recesses 512 are used for pairing the oil seal 511 to prevent the oil seal 511 from being misaligned during the movement of the push rod, resulting in a poor sealing effect.

As shown in FIGS. 12 and 13, in embodiments of the present disclosure, the open end of the second stage push rod is fastened with a first rod cap 513 capping the open end, and a perforation allowing the first stage push rod to pass through is provided in the middle of the first rod cap 513, and the first stage push rod is inserted into the second stage push rod through the perforation.

In the embodiment of the present disclosure, the inner push rod 521 is a cylindrical rod, and the middle push rod 522, the outer push rod 523, and the push rod sleeve 506 are cylindrical. For example, the first stage push rod is the inner push rod 521, and the second stage push rod is the middle push rod 522, and the first rod cap 513 is disposed at the telescopic end of the middle push rod 522. Specifically, the telescopic end of the middle push rod 522 includes a first portion and a second portion, the radial dimension of the second portion is smaller than the radial dimension of the first portion. The first rod cap 513 is grooved, the groove of the first rod cap 513 is oriented toward the second portion and snapped onto the second portion against the front end of the first portion; the first rod cap 513 is resistant and acts as a guide for the telescopic movement of the inner push rod 521.

The peripheral wall of the second portion is provided with a number of first projections 221 in a circumferential direction, the first projections 221 gradually increasing in radial size from front to back. The first rod cap 513 is provided with first openings 5131 in both the groove bottom and the groove wall, and the inner push rod 521 is inserted into the middle push rod 522 via the first openings 5131 at the groove bottom and the first projections 221 are inserted into the first opening 5131 of the groove wall.

In an embodiment of the present disclosure, both ends of the last stage push rod are open ends, one end of the last stage push rod is fastened with a second rod cap 514 capping the open end, the second rod cap 514 forming a closed end of the last stage push rod, and the middle of the inner and outer portions of the second rod cap 514 are provided with guiding blocks projecting along the axial direction, and the compression springs are socketed on the guiding blocks.

In an embodiment of the present disclosure, the last stage push rod is the outer push rod 523, the outer peripheral wall of the closed end of the outer push rod 523 is provided with a number of second projections 231 along the circumferential direction, and the radial size of the second projections 231 from back to front gradually increases. The outer push rod 523 is provided with a grooved second rod cap 514 at the closed end of the outer push rod 523, the grooved opening of the second rod cap 514 is oriented towards the outer push rod 523, and is fastened on the outer push rod 523, the groove wall of the second rod cap 514 is provided with a second opening 5141, and the second projection 231 is inserted into the second opening 5141 of the groove wall. The inner and outer sides of the groove bottom of the second rod cap 514 are provided with guiding blocks projecting along the axial direction, and the guiding blocks are respectively a first guiding block 5142 and a second guide block 5143, the guide blocks are used for the compression springs to be set on them. Specifically, the second compression spring 504 is set on the first guide block 5142, and the third compression spring set 505 is set on the second guide block 5143 to achieve the guidance of the second compression spring 504 and the third compression spring 505 retracting and retracting, and to avoid misalignment of the compression spring during the expansion and contraction of the compression spring.

### Embodiment 6

As shown in FIGS. 14-19, the present disclosure provides a liquid guide structure for a liquid storage box, the liquid storage box 1 having a drop port 31, the liquid guide structure 301 comprising a control valve 11 disposed at the drop port 31 of the liquid storage box 3, the control valve 11 comprising a valve housing 111, the interior of the valve housing 111 being hollowed out to form a liquid guide runner 112, the liquid guide runner 112 being provided with a valve core 13 coaxially coaxial with the liquid guide runner 112, and a first elastic member 113 being provided between the valve core 13 and the valve housing 111, and the valve housing 111 is mounted telescopically on the liquid storage box 1 by means of a second elastic member 14.

In the embodiment of the present disclosure, by providing a second elastic member 14 between the valve housing 111 and the liquid storage box 1, the second elastic member 14 assists the first elastic member 113 to expand and contract during the detergent box push-bounce conduction process, so as to improve the service life of the first elastic member 113.

The delivering device also includes a liquid-conducting tube 12, the liquid-conducting tube 12 is inserted into the valve housing 111 against the valve core 13 through the drop port 31 of the liquid storage box 1, and is connected to the liquid guide runner 112, and the detergent enters into the liquid-conducting tube 12 from the liquid guide runner 112, and then enters into the washing machine through the liquid-conducting tube 12. The control valve and the liquid-conducting tube are components of the liquid guide structure 301 of the liquid storage box.

A detergent is stored in the liquid storage box 1, and a control valve 11 is disposed in the liquid storage box 1, and is located at the drop port of the liquid storage box 1; a liquid guide runner 112 is formed in the hollow interior of the valve housing 111 of the control valve 11, and a valve core 13 is disposed in the liquid guide runner 112 for controlling the opening and closing of the liquid guide runner 112, and a first elastic member 113 is disposed between the valve core 13 and the valve housing 111, and a second elastic member 14 is disposed between the valve housing 111 and the liquid storage box 1, the liquid storage box 1 is suitable for use in a delivering device. The delivering device is provided with at least one insertion groove 302, the liquid storage box 1 being pushably mounted in the insertion groove 302, the liquid storage box 1 being mounted on the insertion groove 302 by means of a push-bounce structure, the push-bounce structure being prior art, and the liquid storage box 1 being push-bounceable.

When the liquid storage box 1 is pushed into and the liquid-conducting tube 12 is inserted into the valve housing 111, the valve core 13 and the valve housing 111 extend, the first elastic member 113 and the second elastic member 14 being compressed, the second elastic member 14 compresses following the compression of the first elastic member 113. The setting of the second elastic member 14 cushions the degree of compression deformation of the first elastic member 113, and the liquid guide runner 112 is connected. When the liquid storage box 1 is popped back and the liquid-conducting tube 12 is not inserted into the valve housing 111, the valve core 13 and the valve housing 111 retract, the first elastic member 113 and the second elastic member 14 resume deformation, and the liquid guide runner 112 is disconnected.

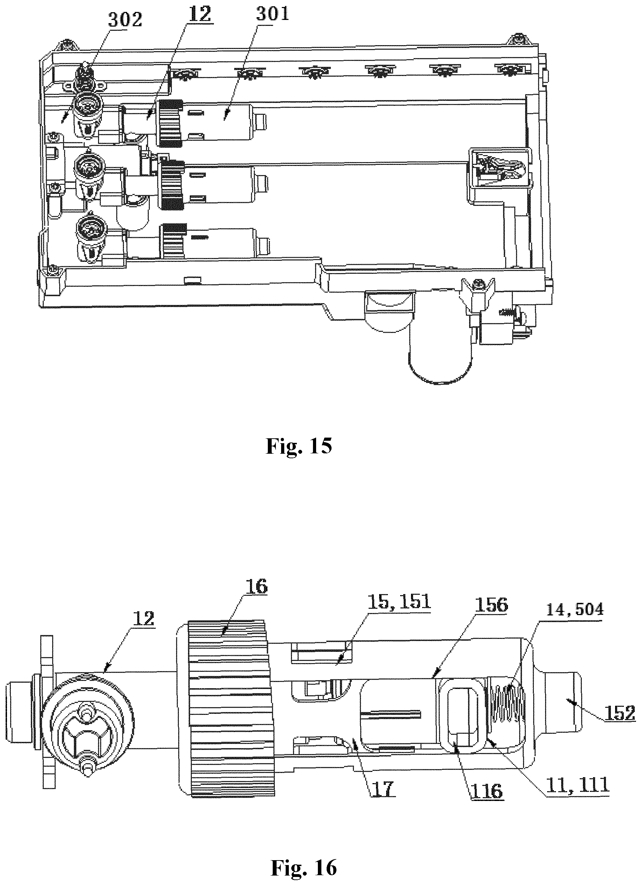

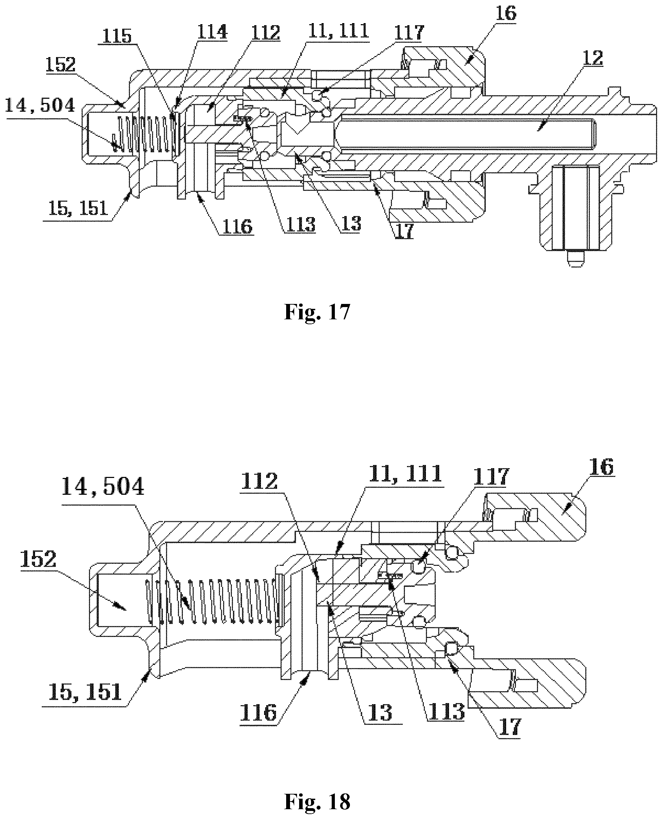

As shown in FIGS. 16 and 17, in this embodiment of the disclosure, the first elastic member 113 is a first compression spring and the second elastic member 14 is the second compression spring 504, with each of the two compression springs extending in an axial direction along the valve core 113, each of the two compression springs extends axially along the valve core 13, the two compression springs provided coaxially, or the axes of the two compression springs being provided in parallel.

In the embodiment of the present disclosure, the first elastic member 113 and the second elastic member 14 are both compression springs, that is, the first elastic member 113 and the second elastic member 14 are capable of being compressed and deformed under the action of an external force to provide a restoring force for the valve housing 111, and the valve core 13; furthermore, the first elastic member 113 and the second elastic member 14 may be rubberized parts.

The first compression spring and the second compression spring 504 both extend along the axial direction of the valve core 13, specifically, the first compression spring and the second compression spring 504 are coaxially provided, or the axes of the first compression spring and the second compression spring 504 are provided in parallel, both of which are to ensure that the first compression spring is doing the retracting action at the same time that the second compression spring 504 is also doing the retracting action, to realize that the second compression spring 504 assists the first compression spring to deform, and to reduce the degree of deformation of the first compression spring.

It is noted that the valve core 113 has an elongate stem-like structure extending in an axial direction, and the first compression spring may be partially socketed to the elongate stem-like structure; one end of the second compression spring 504 may be disposed on the valve housing 111 and the other end is a free end.

Further specifically, the first compression spring, the second compression spring 504, and the valve core 13 are coaxially provided to further ensure that the first compression spring and the second compression spring 504 are synchronized with the action of the valve core 13.

As shown in FIGS. 16 and 17, in the embodiment of the present disclosure, the valve housing 111 is a sleeve-like structure, the valve housing 111 is nested with an outer sleeve 151 coaxial with the valve housing 111, and the second compression spring 504 is disposed between the valve housing 111 and the outer sleeve 151.

In the embodiment of the present disclosure, the outer sleeve 151 serves as the stop structure 15, and has a role of stopping and blocking the second compression spring 504, enabling the second compression spring 504 to be compressed and deformed, the valve housing 111 is a sleeve-like structure, the valve housing 111 has an axis, the outer sleeve 151 is nested outside of the valve housing 111, and the outer sleeve 151 is set coaxially with the sleeve-like valve housing 111, and the second compression spring 504 is disposed between the outer sleeve 151 and the sleeve-shaped valve housing 111; specifically, the outer sleeve 151 and the valve housing 111 are both cylindrical.

Specifically, one end of the outer sleeve 151 and the valve housing 111 axially is an open end and the other end is a closed end, respectively, and the closed end of the valve housing 111 is inserted into the outer sleeve 151 via the open end of the outer sleeve 151, and the second compression spring 504 is provided between the closed end of the valve housing 111 and the closed end of the outer sleeve 151.

One of the two axial ends of the outer sleeve 151 and the valve housing 111 is an open end and the other end is a closed end, and the closed end of the valve housing 111 axis is inserted into the outer sleeve 151 at the open end of the outer sleeve 151, and the second compression spring 504 is located in the outer sleeve 151, and the second compression spring 504 is disposed on the outside of the closed end of the valve housing 111 and the inside of the closed end of the outer sleeve 151, and the second compression spring 504 provides a restoring force for the valve housing 111 to perform an expansion and contraction action within the outer sleeve 151.

As shown in FIG. 17, in an embodiment of the present disclosure, the closed end of the valve housing 111 axially extends to form an annular projection 114, an inner peripheral wall of the annular projection 114 forms a guide groove 115 between the inner peripheral wall of the annular projection 114 and the closed end of the valve housing 111 with an opening toward the closed end of the outer sleeve 151, and an end of the second compression spring 504 is disposed in the guide groove 115.

In the embodiment of the present disclosure, the closed end of the valve housing 111 is provided with an annular projection 114, the annular projection 114 is coaxially set with the valve housing 111, the inner peripheral wall of the annular projection 114 and the closed end of the valve housing 111 are surrounded by a guide groove 115, and the opening of the guide groove 115 is directed towards the closed end of the outer sleeve 151, and the axially oriented end of the second compression spring 504 is provided within the guide groove 115. Specifically, , one end of the second compression spring 504 is disposed on the closed end of the valve housing 111; the guide groove 115 serves as a guide for the expansion and contraction of the second compression spring 504, making the second compression spring 504 expand and contract within a certain limitation, and preventing the expansion and contraction of the second compression spring 504 from being misplaced, which results in the failure to provide a restoring force for the valve housing 111.

The annular projection 114 is circular, the second compression spring 504 is partially embedded in the guide groove 115 in which the annular projection 114 and the closed end of the valve housing 111 are enclosed, and the radial dimension of the second compression spring 504 is smaller than the radial dimension of the annular projection 114, but the radial dimension of the second compression spring 504 is slightly smaller than the radial dimension of the annular proj ection 114 to enable the guide groove 115 to be accurately guided for the second compression spring 504 to be accurately guided.

As shown in FIGS. 16 and 17, in an embodiment of the present disclosure, the closed end of the outer sleeve 151 is axially projected to form a guide tube 152 that is open at one end and closed at the other end, the radial dimensions of the guide tube 152 are smaller than the radial dimensions of the outer sleeve 151, and the guide tube 152 is connected to the outer sleeve 151 via the open end of the guide tube 152.

In the embodiment of the present disclosure, a guide tube 152 is provided outside the closed end of the outer sleeve 151, and the guide tube 152 is formed by the closed end of the outer sleeve 151 extending outwardly. Specifically, the closed end of the outer sleeve 151 extends axially outwardly of the outer sleeve 151 to form a bar-shaped bump, and the bar-shaped bump forms the guide tube 152 being internally hollow, and one end of the axial direction of the guide tube 152 is a closed end, the other end is an open end. The open end of the guide tube 152 is communicated with the outer sleeve 151, and the closed end of the guide tube 152 is used as the closed end of the outer sleeve 151. The guide tube 152 plays a guiding role in the expansion and contraction of the second compression spring 504, so that the second compression spring 504 is expanded and contracted within a certain limit, preventing the expansion and contraction of the second compression spring 504 from being misplaced, resulting in the failure of the valve housing 111 to provide restoring force.

The radial dimension of the guide tube 152 is smaller than the radial dimension of the outer sleeve 151, and the radial dimension of the guide tube 152 is larger than the radial dimension of the second compression spring 504, but the radial dimension of the second compression spring 504 is slightly smaller than the radial dimension of the guide tube 152 to allow the guide tube 152 to be accurately guided against the second compression spring 504.

Specifically, the other end of the second compression spring 504 axially is inserted into the guide tube 152 via the open end of the guide tube 152, and the second guide tube 152 is coaxially disposed with the outer sleeve 151 such that the guide tube 152 can further accurately guide the second compression spring 504.

As shown in FIG. 17, an embodiment of the present disclosure further comprises a groove-shaped box cover 16, a central portion of the groove bottom of the box cover 16 axially projecting to form an inner sleeve 17 with open ends, a valve housing 111 being inserted into the inner sleeve 17 through the open end of one end of the inner sleeve 17, a liquid-conducting tube 12 being inserted into the valve housing 111 through the open end of the other end of the inner shell, and one end of the inner sleeve 17 being inserted into the outer sleeve 151 through the open end of the outer sleeve 151.

In an embodiment of the present disclosure, the box cover 16 is fastened to the drop port 31 of the liquid storage box 1 for capping or opening the drop port 31 of the liquid storage box 1. Specifically, the drop port 31 of the liquid storage box 1 is provided with a ring of projections extending outwardly from the box; the box cover 16 is in the shape of a groove, and the central part of the bottom of the groove of the box cover 16 is axially projecting to form the inner sleeve 17 which is open at both ends, and the outer peripheral wall of the inner sleeve 17 is provided with a gap between the outer peripheral wall of the inner sleeve 17 and the groove wall of the box cover 16, the above mentioned projection is inserted into the gap.

The middle of the groove bottom of the box cover 16 is provided with a through hole connected to the open end of the inner sleeve 17, the liquid-conducting tube 12 is inserted into the valve housing 111 through the through hole, the open end of the inner sleeve 17, and the open end of the valve housing 111, and one end of the inner sleeve 17 is inserted into the outer sleeve 151 through the open end of the outer sleeve, and the inner sleeve 17 plays a stabilizing role in the outer sleeve 151 to reduce the wobbling of the valve core 13 and the valve housing 111 during the expansion and contraction movement. Therein, the inner sleeve 17 is also cylindrical, and the inner sleeve 17 is coaxially provided with the outer sleeve 151.

The inner sleeve 17 is inserted into the outer sleeve 151 with one end of the inner sleeve 151 abutting against the inner wall of the outer sleeve 151, specifically, the outer sleeve 151 is divided into a first section 153 and a second section 154 along the direction from the open end to the closed end of the outer sleeve 151, and the inner wall of the second section 154 projects inwardly with respect to the inner wall of the first section 153 to form a step 155, and the one end of the inner sleeve 17 abuts against the step 155 on the inner wall of the outer sleeve 151, improving the integrality and synchronization between the outer sleeve 151 and the inner sleeve 17. In order to further improve the integrality and synchronization between the outer sleeve 151 and the inner sleeve 17, the inner peripheral wall of the second section 154 projects inwardly with respect to the inner peripheral wall of the first section 153 to form a circle of steps 155, increasing the area of the one end of the inner sleeve 17 that is pressed against the inner wall of the outer sleeve 151; specifically, the inner sleeve 17 has an outermost cross-section in the axial direction against the step 155.

In addition, the inner peripheral wall of the inner sleeve 17 radially projects to form a first sliding projection, and the outer peripheral wall of the valve housing 111 radially projects to form a second sliding projection. The first sliding projection and the second sliding projection extending in the axial direction, both in the form of an elongate strip, and the first sliding projection and the second sliding projection abutting each other side-by-side along a circumferential direction, the first sliding projection abutting against the outer peripheral wall of the valve housing 111, and the second sliding projection abutting against the inner peripheral wall of the inner sleeve 17.

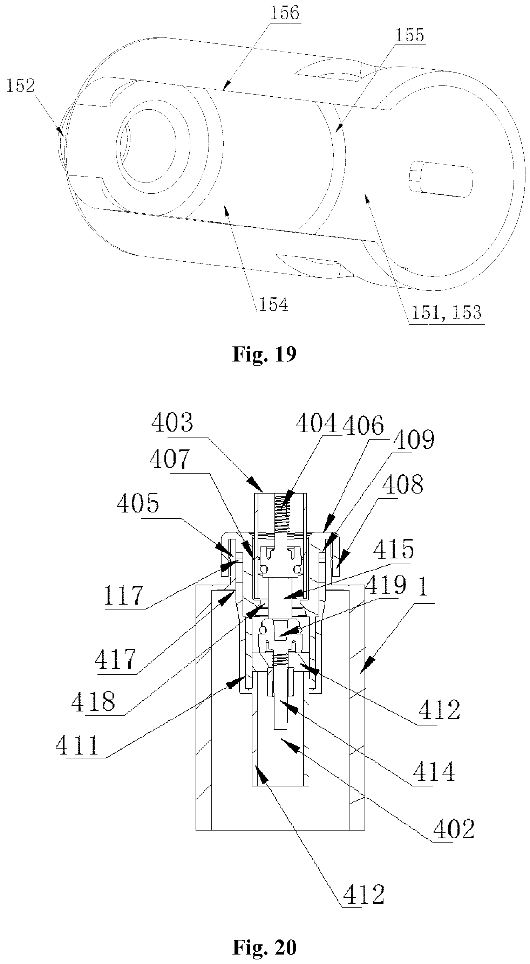

As shown in FIG. 19, in this embodiment of the disclosure, the valve housing 111 is provided with a pilot port 116 in a lower portion of the valve housing 111, and the outer sleeve 151 is provided with an opening 156 in the lower portion of the outer sleeve 151 that expands from an open end of the outer sleeve 151 to a closed end of the outer sleeve 151.

In the embodiment of the present disclosure, the lower portion of the valve housing 111 radially projects to form a conduit, and the inner wall of the conduit encloses a guide port 116, so that when the detergent is delivered, the detergent enters into the liquid guide runner 112 from the guide port 116, and from the liquid guide runner 112, it enters into the liquid-conducting tube 12.

The lower portion of the outer sleeve 151 is provided with an opening 156, the opening 156 exposes the guide port 116, allowing detergent to enter from the guide port 116 into the liquid guide runner, and in order to further reduce the cost of fabricating the outer sleeve 151, the opening is an open portion of the lower portion of the outer sleeve 151, and the opening extends from the open end of the outer sleeve 151 to the closed end.

For the sealing of the liquid storage box 1, an annular seal is provided on the end of the liquid-conducting tube 12 that is inserted into the valve housing 111, with the outer periphery of the annular seal against the valve housing 111. Both the valve housing 111 and the valve core 13 are provided with a sealing ring 117, the sealing ring 117 sealing in real time with the movement of the valve housing.

### Embodiment 7

Currently, there is a cartridge-type liquid storage box in a washing machine, and a liquid-conducting plug unit is usually provided at a location where the liquid storage box is installed in the washing machine, and the additives in the liquid storage box are exported through the liquid-conducting plug unit. Usually, the liquid-conducting plug unit is set up as a structure that can be plugged into the liquid storage box, and the part that is plugged into the liquid storage box can absorb the additives in the liquid storage box, and the additives in the liquid storage box can be exported through pumping and other means to be put into the liquid storage box. When the liquid storage box needs to be cleaned or replaced, the liquid storage box can be removed, and the liquid storage box is separated from the liquid-conducting plug unit, during which the residual additives in the liquid-conducting plug unit may flow out, and part of the additives left on the liquid-conducting plug unit may affect the hygiene of the location of the liquid-conducting plug unit, and may harbor bacteria. In this regard, the present disclosure provides a new liquid guide structure for the liquid storage box, which can ensure that the additives in the liquid-conducting plug unit will not leak out when the liquid storage box is removed.

As shown in FIG. 20, the present disclosure provides a liquid guide structure of a liquid storage box, in which a liquid guide channel is provided in the liquid-conducting plug unit 403 for the additives to be sucked out, and a first check valve 404 is provided in the liquid guide channel for controlling the conductivity or closure thereof. Through the provision of the first check valve 404, it is possible to control whether or not the additives in the liquid-conducting plug unit 403 are able to flow out. Further, the liquid guide channel can be closed when the liquid-conducting plug-in unit 403 needs to be closed, avoiding additive leakage from the liquid-conducting plug-in unit 403.

The liquid storage box 1 is provided with an output channel connected to the outside world, and a second check valve 402 is provided in the output channel to control its conduction or closure. The liquid-conducting plug unit 403 is usually provided at a location where the liquid liquid storage box 1 is installed, and an opening 417 is provided in the output channel of the liquid liquid storage box 1 for connecting to the outside world. When the liquid liquid storage box 1 is fixed in a washing machine, the liquid-conducting channel of the liquid-conducting plug unit 403 is inserted into the liquid liquid storage box 1. And the liquid-conducting channel is connected to the output channel, and the first check valve 404 and the second check valve 402 are provided opposite to each other, and the first check valve 404 and the second check valve 402 are offset against each other and triggered to conduct both of them. The first check valve 404 and the second check valve 402 are set opposite to each other, and can be opened to each other after they are set against each other. This allows the additive in the output channel of the liquid storage box 1 to be sucked out by the conductive channel in the conductive plug unit 403. Specifically, during installation of the liquid storage box 1, the second check valve 402 moves together with the liquid storage box 1, causing the first check valve 404 to move in a direction proximate to the liquid-conducting plug unit 403. After the liquid liquid storage box 1 is mounted in place, the first check valve 404 and the second check valve 402 are offset from each other, i.e., the first check valve 404 and the second check valve 402 are pushed against each other so that the first check valve 404 and the second check valve 402 are in the state of being inducted. The additive may flow from the output channel to the conductive channel.

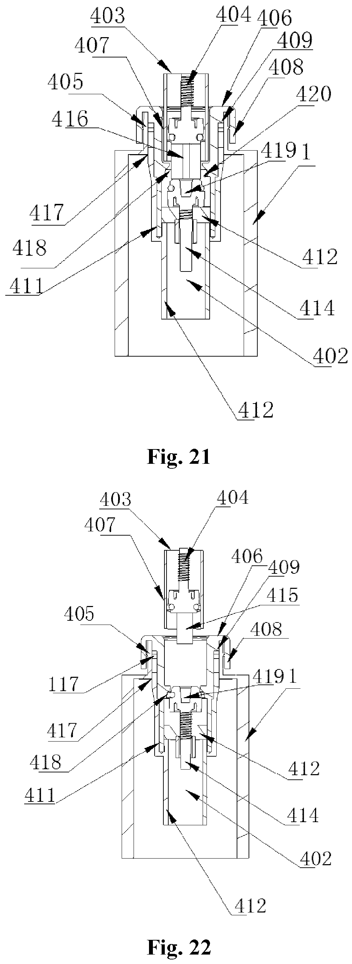

In contrast, as shown in FIG. 22, when it is necessary to remove the liquid storage box 1, the liquid-conducting plug unit 403 should be separated from the liquid storage box 1 by moving the liquid storage box 1; i.e., the liquid storage box 1 should be removable at least in the direction of extension of the liquid-conducting plug unit 403. Separation of the liquid liquid storage box 1 from the liquid-conducting plug unit 403 causes the liquid-conducting channel of the liquid-conducting plug unit 403 to be moved out of the output channel of the liquid liquid storage box 1, which in turn causes the first check valve 404, the second check valve 402 to be separated from each other. The first check valve 40, the second check valve 402 are no longer in contact with each other, and the force between them to open each other disappears, so the first check valve 404, the second check valve 402 are closed in their respective channels. That is, when the liquid storage box 1 needs to be removed, the liquid storage box 1 is moved in a direction away from the liquid-conducting plug unit 403, resulting in the second check valve 402 of the liquid storage box 1 and the first check valve 404 of the liquid-conducting plug unit 403 separating from each other, and then the two are no longer mutually top-open, so the first check valve 404, the second check valve 402 loses its top-open force, resulting in the first check valve 404, the second check valve 402 being in a closed state. The first check valve 404 and the second check valve 402 are in a closed state. The second check valve 402 closes the output channel so that the additives cannot flow into the liquid liquid storage box 1; the first check valve 404 closes the liquid-conducting channel so that the additives cannot flow out of the liquid-conducting plug unit 403, thus avoiding leakage of the additives in the liquid-conducting plug unit 403.

Specifically, the output channel of the liquid storage box 1 is provided with an opening 417 that is connected to the outside world, the liquid guide channel of the liquid-conducting plug unit 403 is inserted into the output channel from the opening 417, and the portion of the liquid guide channel that is inserted into the output channel is provided with a suction port 418, and the suction port 418 is connected to the output channel. That is, the additive is sucked in by the suction port 418 of the liquid guide channel and is exported by the liquid-conducting plug unit 403.

As shown in FIGS. 20 and 21, a mounting groove 405 is provided at the opening 417 of the liquid storage box 1 that protrudes outwardly from the liquid storage box 1, and a mounting sleeve 406 is embedded in the mounting groove 405, and the mounting sleeve 406 can be utilized to fix the first check valve 404, the second check valve 402. The mounting sleeve 406, as shown in figures, extends axially along the liquid storage box 1 to its interior, is a circular internally hollow sleeve structure, and a second check valve 402 is provided at one end within the mounting sleeve 406, i.e., the end of the mounting sleeve 406 away from the liquid-conducting plug unit 403 constitutes the shell of the second check valve 402. The housing internally fixes the internal structure of the second check valve 402. The end of the second check valve 402 in the mounting sleeve 406 near the liquid-conducting plug unit 403 is provided with a hollow inner cavity 407, and the first check valve 404 can be inserted in the hollow inner cavity 407 correspondingly. The mounting sleeve 406 can be utilized not only to fix the second check valve 402, but also to allow the first check valve 404 to be embedded in the mounting sleeve 406, i.e., the mounting sleeve 406 can be utilized to limit the direction of movement of the first check valve 404 and the second check valve 402.

The specific connection structure of the mounting sleeve 406 and the mounting groove 405 is shown in FIGS. 20 and 21. The end portion of the mounting sleeve 406 near the liquid-conducting plug unit 403 is provided with a flap 408 that is bent toward the outside of the mounting groove 405, and the mounting groove 405 is snap-embedded in the gap between the flap 408 and the body of the mounting sleeve 406. That is, the installation of the mounting sleeve 406 is realized by using the snap-in cooperation between the flap 408 and the mounting groove 405. Specifically, as shown in the figure, the mounting groove 405 and the flap 408 may be provided with structures that can be snap-fit with each other at opposite positions, and the snap-fit structure is utilized to realize fixing the mounting sleeve 406 with the mounting groove 405. As the mounting sleeve 406 is embedded with the first check valve 404 and the second check valve 402, the mounting sleeve 406 needs to bear a certain amount of weight, and in order to ensure a stable connection between the mounting sleeve 406 and the mounting groove 405, the mounting sleeve 406 and the mounting groove 405 must be stably fixed, and therefore the flap 408 needs to extend a longer length. As shown in the figure, the flap 408 extends to the bottom end of the mounting groove 405 near the opening of the liquid storage box 1, even though the length of the portion of the flap 408 and the mounting groove 405 that cooperate with each other is longer, so that the flap 408 and the mounting groove 405 are not easy to easily fall off.

As shown in the figure, the part of the mounting sleeve 406 embedded in the interior of the mounting groove 405 is provided with a limiting projection 409 protruding from the body of the mounting sleeve 406 toward the mounting groove 405, and a limiting space is formed between the limiting projection 409, the body of the mounting sleeve 406, and the mounting groove 405, the sealing ring 117 is embedded in the limiting space. The provision of the sealing ring 117 makes it possible to ensure a tight connection between the mounting sleeve 406 and the mounting sleeve 406, preventing the separation of the two.

As shown in the figure, the guide flow groove 411 is embedded in the mounting groove 405 , and the guide flow groove 411 extends along the axial direction of the liquid storage box 1; by the provision of the guide flow groove 411, the additives flowing into the liquid storage box 1 can flow in the guide flow groove 411, which in turn restricts the additives to flow stably in the guide flow groove 411. The guide flow groove 411 has a hollow mounting cavity within, and the mounting sleeve 406 is embedded in the mounting cavity. That is, the guide flow groove 411 is also wrapped with the mounting sleeve 406, which further ensures the stable connection of the first check valve 404 and the second check valve 402 through the setup of the two structures of the guide flow groove 411 and the mounting sleeve 406. The mounting cavity of the guide flow groove 411 is connected to a diversion tube 412 which is hollow inside and guides the flow of the additive. Specifically, the mounting sleeve 406 is embedded in the mounting cavity, and part of the structure of the second check valve 402 embedded in the mounting sleeve 406 may pass through the mounting sleeve 406 and extend into the mounting cavity to form a gap 413 with the mounting sleeve 406. The gap 413 is provided with a guiding structure except for an opening in the center where a portion of the second check valve 402 can be embedded. The guide structure can be utilized to limit the movement of the second valve core 414 of the second check valve 402, wherein the guide structure can also be provided with holes for the flow of additives, so that the additives can pass through the guide structure. The mounting cavity and the diversion tube 412 are both open at both ends and hollow inside, and the opening of the mounting cavity near the first check valve 404 is connected to the opening of one end of the diversion tube 412. That is, by connecting the mounting cavity and the diversion tube 412, the second check valve 402 and the first check valve 404 are embedded in the mounting cavity, so that through the control of the second check valve 402 and the first check valve 404, the additives can flow from the guide flow groove 411 into the output channel and into the liquid-guiding channel, and ultimately flow out of the liquid-guiding channel.

Specifically, the specific structure of the first check valve 404, the second check valve 402 is shown in figures, a first valve core 15 is provided in the first check valve 404, a second valve core 414 is provided in the second check valve 402, the first valve core 415, the second valve core 414 are provided relative to each other, and the relative ends of the first valve core 415, the second valve core 414 may be offset against each other or separated from each other. That is, when the first check valve 404, the second check valve 402 come into contact with each other against each other, the first valve core 415, the second valve core 414 are offset against each other at the opposing ends and the first valve core 415, the second valve core 414 are pressed against each other, causing the first check valve 404, the second check valve 402 to be guided. That is, the first valve core 415, the second valve core 414 are coaxially and relatively disposed.

In the first check valve 404, the valve corefirst valve core 415 is provided with a spring pointing outwardly in its conducting direction, and in the second check valve 402, the second valve core 414 is provided with a spring pointing outwardly in its conducting direction. After the first valve core 415 and the second valve core 414 are pushed away from each other, the first valve core 415 and the second valve core 414 will squeeze the springs on their respective sides. And when the first check valve 404, the second check valve 402 are separated from each other, the first valve core 415, the second valve core 414 gradually separate from each other, and the force between them to open each other disappears, so the first valve core 415, the second valve core 414 will be reset under the action of their respective compression springs, which will lead to the first check valve 404, the second check valve 402 being blocked.

Further preferably, as shown in the figure, the first valve core 415 is provided with a push pin 416, the push pin 416 extends in a direction pointing to the second valve core 414; the first valve core 415 and the second valve core 414 are in contact with each other, and the push pin 416 pushes the second valve core 414 against the push pin 416, i.e., the first valve core 415 pushes the second valve core 414 against the push pin 416, therefore, the first valve core 415 is provided with a valve body structure with a hollow space, and the push pin 416 is embedded in the hollow space of the first valve core 415. Therefore, the valve corefirst valve core 415 may be set up as a valve structure with a hollow space inside, and the push pin 416 is embedded in the hollow space of the first valve core 415. That is, because the push pin 416 is used to push the second check valve 402, the structure of the first check valve 404 can be set as a hollow structure with the push pin 416 embedded, so that the structure of the first check valve 404 is more material-saving.

Further preferably, as shown in FIG. 21, the first valve core 415 may be provided as a valve core structure having a push pin 416 inside, the push pin 416 is externally provided with a sliding sleeve coaxial with the push pin 416, and the push pin 416 may move together with the first valve core 415. A plugging groove 419 is provided in the second valve core 414 opposite to the push pin 416 for the second valve core 414 to extend into, and when the liquid storage box 1 is installed, the push pin 416 of the first valve core 415 is inserted into the plugging groove 419 correspondingly, and the second valve core 414 is pushed open by the push pin 416. Specifically, the slip-on sleeve may be processed in a larger size accordingly, so that a part of the second valve core 414 can be extended into the slip-on sleeve when the liquid storage box 1 is installed, and so that the valve pin 16 is correspondingly inserted into the insertion groove 419, which can achieve the effect of causing the first valve core 415 to push the second valve core 414 to move as described above.

The liquid guide structure of the liquid storage box provided by the present disclosure is provided with a first check valve 404 on the liquid-conducting plug unit 403, so that the first check valve 404 can be used to control whether or not the additives in the liquid-conducting plug unit 403 are outflowed, thus avoiding the additives in the liquid-conducting plug unit 403 from leaking out. Moreover, a second check valve 402 is provided at the drop port of the liquid storage box, and the first check valve 404 and the second check valve 402 are provided relative to each other, so that the first check valve 404 and the second check valve 402 are open to each other during the installation of the liquid storage box 1, and with the movement of the liquid storage box 1, the first check valve 404 and the second check valve 402 open to each other, and then the additives are controlled to flow to the liquid storage box 1 from the liquid-conducting plug unit 403. When the liquid storage box 1 is removed, as the liquid storage box 1 moves, the first check valve 404 and the second check valve 402 are separated from each other and closed, thereby controlling the additives in the liquid-conducting plug unit 403 from leaking out and the additives from flowing into the liquid storage box 1, so as to achieve the effect of avoiding the additives in the liquid-conducting plug unit 403 from flowing out.

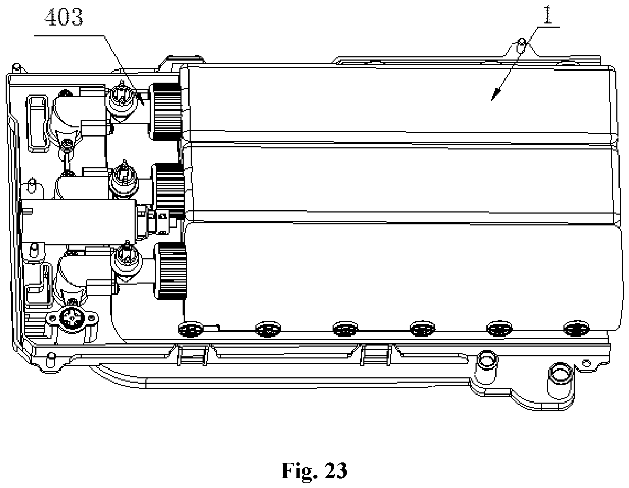

As shown in FIG. 23, the washing machine is provided with a delivery device, the delivery device has at least one plugging groove, the delivery structure includes a liquid storage box 1 mounted in the plugging groove, the plugging groove is provided with a liquid-guide insertion unit 403, the liquid storage box 1 is mounted in the plugging groove, the liquid-guide insertion unit 403 is inserted and mated to the liquid storage box 1. When the liquid storage box 1 needs to be removed, the liquid-conducting plug unit 403 will be separated from the liquid storage box 1. In other words, the liquid storage box 1 and the liquid-conducting insertion unit 403 described in the present disclosure are provided in a delivery device of the washing machine for delivering additives.

The above is only a preferred embodiment of the present disclosure, and is not a formal limitation of the present disclosure. Although the present disclosure has been disclosed as a preferred embodiment, it is not intended to limit the present disclosure, and any skilled person familiar with the present patent may, without departing from the scope of the technical scheme of the present disclosure, use the technical content of the above mentioned hints to make some changes or modifications for equivalent changes of equivalent embodiments, but any simple modifications and modifications made to the above embodiments based on the technical substance of the present disclosure are still within the scope of the technical scheme of the present disclosure. However, any simple modifications, equivalent changes and modifications made to the above embodiments based on the technical substance of the present disclosure without departing from the content of the technical scheme of the present disclosure are still within the scope of the present disclosure.

## Claims

1. A liquid-conducting plug structure, provided on an additive delivery module, which can be inserted into a liquid storage box by a delivery port of the liquid storage box to communicate with the additives inside the liquid storage box, **characterized in that**,
the liquid-conducting plug structure is provided with a detecting device for detecting a category and/or residual amount of additives inside the liquid storage box.

2. The liquid-conducting plug structure according to claim 1, **characterized in that**, the detecting device comprises two conducting probes set on the liquid-conducting plug structure in contact and conduction with the additives in the liquid storage box, and based on conductivity information of the two conducting probes after being energized, the category and/or residual amount of the additives in the liquid storage box are detected.

3. The liquid-conducting plug structure according to claim 2, **characterized in that** the liquid-conducting plug structure comprises a liquid-conducting plug tube that can be inserted into the liquid storage box by a drop port of the liquid storage box, and the conducting probes are fixedly disposed on the liquid-conducting plug tube;
each of the conducting probes has a probing end for detecting the category and/or residual amount and a wiring end for connecting to an external detection circuit, the probing end of the conducting probes extends into the liquid-conducting plug tube and/or into the liquid storage box;
preferably, the conducting probes are embedded in or affixed to an inner wall of the fluid-conducting plug tube.

4. The liquid-conducting plug structure according to claim 3, **characterized in that** the liquid-conducting plug tube comprises a liquid-conducting tube section and a plug tube section connected to an end of the liquid-conducting tube section with a reduced outer diameter;
an end of the liquid-conducting tube section is connected to the additive delivery module and an other end is connected to the plug tube section, the conducting probe is set in the liquid-conducting tube section with a liquid-conducting channel, and the probing end of the conducting probes is located in the liquid-conducting channel.

5. The liquid-conducting plug structure according to claim 3, **characterized in that** the liquid-conducting plug tube comprises a liquid-conducting tube section and a plug tube section connected to the end of the liquid-conducting tube section with a reduced outer diameter;
the liquid-conducting tube section extends inwardly curved near a port edge of the plug tube section to form an annular connecting wall attached to the port edge of the plug tube section port;
the annular connecting wall is provided with a first through-hole for the probing end of the conducting probes to extend through, and the probing end of the conducting probes extends from the first through-hole to an exterior of the liquid-conducting plug tube in contact with the additive in the liquid storage box;
preferably, the annular connecting wall is provided with a number of reinforcing ribs connected between the liquid-conducting tube section and the plug tube section.

6. The liquid-conducting plug structure according to claim 3, **characterized in that**, at least two conductive contacts are provided on a tube wall of the liquid-conducting plug tube, the wiring end of the conducting probes is connected to the conductive contacts, and the conductive contacts are connected to the external detection circuit;
preferably, the conductive contacts are provided outside the tube wall of the liquid-conducting plug tube; or, are embedded in the tube wall of the liquid-conducting plug tube and are at least partially exposed to the tube wall of the liquid-conducting plug tube.

7. The liquid-conducting plug structure according to claim 3, **characterized in that**, a second through-hole for the wiring end of the conducting probes to pass through is provided on the tube wall of the liquid-conducting plug tube, and the wiring end of the conducting probes extends out from the second through-hole to connect with the external detection circuit;
preferably, the liquid-conducting plug structure further comprises a protective cover cylinder connected to a peripheral wall of the liquid-conducting plug tube, the protective cover cylinder is located outside of the conducting probes, and the wiring end at a lower end of the conducting probes extending out of the protective cover cylinder to connect with the external detection circuit;
more preferably, a sealing ring is provided between the second through-hole and the peripheral wall of the conducting probes.

8. The liquid-conducting plug structure according to any one of claims 1-6, **characterized in that**, the detecting device further comprises a flow detection mechanism provided on the liquid-conducting plug structure for obtaining flow information of the additives output from the liquid storage box; the category and/or residual amount of additives in the liquid storage box is inferred based on the flow information obtained by the flow detection mechanism;
preferably, the liquid-conducting plug structure comprises a liquid-conducting plug tube that can be inserted into the liquid storage box by a drop port of the liquid storage box, the liquid-conducting plug tube has a conduction channel inside, and the flow detection mechanism comprises a flow sensor set inside the conduction channel;
preferably, the liquid-conducting plug tube comprises a liquid-conducting tube section and a plug tube section connected to the end of the liquid-conducting tube section with a reduced outer diameter; the flow detection mechanism comprises a flow sensor provided on the peripheral wall of the plug tube section, or on the annular connecting wall between the liquid-conducting tube section and the plug tube section.

9. An additive delivery module comprising a liquid storage box with an internal closed chamber for additive storage, and an insertion groove for mounting the liquid storage box, **characterized in that**,
the insertion groove is provided with the liquid-conducting plug structure according to any one of the claims 1-8, and after the liquid storage box is installed into the insertion groove, the liquid-conducting plug structure is inserted to open the drop port of the liquid storage box to realize delivery of additives.

10. A clothing treatment device, **characterized in that** the additive delivery module according to claim 9 is provided between the clothing treatment device and a tap water connector.

11. A push-bounce structure, **characterized in that** at least two stages of push rods are set coaxially, an upper stage of the push rod is connected to a lower stage of the push rod by an elastic member, and a last stage of the push rod is connected to the elastic member.

12. The push-bounce structure according to claim 11, **characterized in that** each stage of the push rods is a sleeve-like structure, and the push rods are set nested sequentially from inside to outside;
preferably, one end of the sleeve-like push rod is an open end, and an other end is a closed end, and the upper stage of the push rod is inserted into the lower stage of the push rod via the open end of the lower stage of the push rod.

13. The push-bounce structure according to claim 12, **characterized in that** the upper stage of the push rod and the lower stage of the push rod are connected by a compression spring, the compression spring is provided in the lower stage of the push rod and is connected to the closed end of the upper stage of the push rod and the closed end of the lower stage of the push rod, respectively;
preferably, the compression spring is provided coaxially with each stage of the push rod.

14. The push-bounce structure according to claim 12 or 13, **characterized in that** a sealed damping chamber is formed between an outer wall of the upper stage of the push rod and an inner wall of the lower stage of the push rod, the damping chamber is filled with a damping fluid.

15. The push-bounce structure according to claim 14, **characterized in that** the open end of a second stage of the push rod is provided with a first rod cap to close the open end, a middle of the first rod cap is provided with a perforation, and a first stage of the push rod is inserted into the second stage of the push rod through the perforation;
preferably, an outer wall of the closed end of the first stage of the push rod is projected along a radial direction to form a ring of bosses, an outer periphery of the ring of the bosses is adhered to an inner periphery of the second stage of the push rod, and the damping chamber is separated into two independent damping chambers by the bosses, and a through-hole is provided in an axial direction on the bosses, and the two independent damping chambers are communicated through the through-hole;
preferably, the first stage of the push rod is a solid push rod.

16. The push-bounce structure according to claim 15, **characterized in that** an outer peripheral wall of the first stage of the push rod is provided with an oil seal, and an outer periphery of the oil seal is affixed and sealed with the inner peripheral wall of the second stage of the push rod;
preferably, the outer wall of the first stage of the push rod is provided with a ring of positioning grooves, and an inner periphery of the oil seal is embedded in the positioning grooves.

17. The push-bounce structure according to any one of claims 12-16, **characterized in that** both ends of the last stage of the push rod are open ends, and one end of the last stage of the push rod is fastened with a second rod cap capping the open end, and the second rod cap serves as the closed end of the last stage of the push rod, and an inner and outer sides at a bottom of the second rod cap are respectively provided with guiding blocks projecting along an axial direction, and the compression spring is sleeved to the guiding blocks.

18. The push-bounce structure according to any one of claims 12-17, **characterized in that** an outer wall of each stage of the push rod is provided with a radially projecting slider and an inner wall of each stage of the push rod is provided with a radially recessed slider groove, both the slider and the slider groove extend in the axial direction, and the upper stage of the push rod slidingly connects with the lower stage of the push rod through the slider sliding in the slider groove.

19. The push-bounce structure according to any one of claims 12-18, **characterized in that** a push rod sleeve is nested outside the last stage of the push rod, one end of the push rod sleeve is an open end and an other end is a closed end, and the last stage of the push rod is inserted into the push rod sleeve via the open end of the push rod sleeve, and the elastic member on the last stage of the push rod is connected to the closed end of the push rod sleeve.

20. A detergent box assembly comprising a water box and a detergent box mounted inside the water box, the detergent box can be pulled out of the water box and pushed into the water box, **characterized in that** it further comprises the push-bounce structure according to any one of claims 11-19, wherein a telescopic end of a first stage of the push rod abuts against the detergent box, and the elastic member of the last stage of the push rod is connected to a rear sidewall of the water box.

21. A liquid guide structure of a liquid storage box, including a control valve disposed at a drop port of the liquid storage box, the control valve comprises a valve housing, a liquid guide runner formed by hollowing out an interior of the valve housing, a valve core is disposed coaxially within the liquid guide runner, and a first elastic member is disposed between the valve core and the valve housing, **characterized in that** the valve housing can be mounted telescopically to the liquid storage box by a second elastic member.

22. The liquid guide structure according to claim 21, **characterized in that** the first elastic member is a first compression spring, the second elastic member is a second compression spring, the first compression spring and the second compression spring extend axially along the valve core respectively, and the first compression spring and the second compression spring are coaxially provided or parallel provided;
preferably, the first compression spring and the second compression spring, the valve core, and the drop port of the liquid storage box are coaxially provided.

23. The liquid guide structure according to claim 22, **characterized in that** the valve housing is a sleeve-like structure, the valve housing is nested with an outer sleeve coaxial with the valve housing, and the second compression spring is disposed between the valve housing and the outer sleeve;
preferably, a sealing ring is disposed outside of both the valve housing and the valve core, and the sealing ring seals with the movement of the valve housing and the valve core.

24. The liquid guiding structure according to claim 23, **characterized in that** one end of the outer sleeve and the valve housing axially is an open end and the other end is a closed end respectively, the closed end of the valve housing is inserted into the outer sleeve via the open end of the outer sleeve, and the second compression spring is provided between the closed end of the valve housing and the closed end of the outer sleeve.

25. The liquid guiding structure according to any one of claims 21-24, **characterized in that** the closed end of the valve housing is axially projected to form an annular projection, an inner peripheral wall of the annular projection and the closed end of the valve housing form a guide groove with an opening facing the closed end of the outer sleeve, and one end of the second compression spring is disposed in the guide groove.

26. The fluid guide structure according to claim 25, **characterized in that** the closed end of the outer sleeve is axially projected to form a guide tube with an open end and a closed end, a radial dimension of the guide tube is smaller than a radial dimension of the outer sleeve, the guide tube is connected to the outer sleeve via the open end of the guide tube, and the other end of the second compression spring is inserted into the guide tube via the open end of the guide tube.

27. The liquid guiding structure according to any one of claims 21-26, **characterized in that** further comprises a groove-shaped box cover fastened to the drop port, the open end of the outer sleeve is embedded in a groove of the box cover;
preferably, a central part of a groove bottom of the box cover axially projects to form an inner sleeve with open ends, the valve housing is inserted into the inner sleeve through the open end of the inner sleeve, and one end of the inner sleeve is inserted into the outer sleeve through the open end of the outer sleeve.

28. The fluid guide structure according to claim 27, **characterized in that** the outer sleeve is divided into a first section and a second section along a direction from the open end to the closed end of the outer sleeve, an inner wall of the second section projecting inwardly to form a step relative to the inner wall of the first section, and one end of the inner sleeve abuts against the step on the inner wall of the outer sleeve.

29. The guide structure according to any one of claims 21-28, **characterized in that** the valve housing is provided with a guide port in a lower portion of the valve housing, and the outer sleeve is provided with an opening in a lower portion of the outer sleeve that exposes the guide port, the opening extending from the open end of the outer sleeve to the closed end of the outer sleeve.

30. A delivery device being provided at least one insertion groove, the delivery device comprises a liquid storage box mounted in the insertion groove, **characterized in that** further comprises a liquid-conducting tube and the liquid guide structure according to any one of claims 21-29, one end of the liquid-conducting tube is inserted into the valve housing via the drop port of the liquid storage box in connection with the liquid guide flow channel;
preferably, the liquid storage box is mounted on the insertion groove by a push-bounce structure which can be pushed and popped.

31. A liquid guide structure of a liquid storage box, including a liquid-conducting plug unit, which is inserted with the liquid storage box, and is internally provided with a liquid guide channel for exporting an additive from the liquid storage box; **characterized in that** the liquid guide channel of the liquid-conducting plug unit is provided with a first check valve for controlling the conductivity or closure thereof.

32. The liquid guide structure of the liquid storage box according to claim 31, **characterized in that** the liquid storage box is provided with an output channel communicated to outside, and the output channel is provided with a second check valve to control its conduction or closure; the liquid guide channel is communicated with the output channel by plugging, the first check valve and the second check valve are set opposite to each other, the first check valve and the second check valve are abutted to each other and triggered to open, and the first check valve and the second check valve are separated and triggered to close.

33. The liquid guide structure of the liquid storage box according to claim 32, **characterized in that** the output channel of the liquid storage box is provided with an opening connected to the outside, the liquid guide channel of the liquid-conducting plug unit is inserted into the output channel by the opening, a part of the liquid guide channel inserted into the output channel is provided with a suction port, and the suction port is connected to the output channel; and a first check valve is in offsetting contact with the second check valve through the suction port or is separated from the second check valve.

34. The liquid guide structure of the liquid storage box according to claim 33, **characterized in that** a first valve core is provided in the first check valve, and a second valve core is provided in the second check valve; the first valve core and the second valve core are provided coaxially and opposite to each other, opposite ends of the first valve core and the second valve core may be offset or separated from each other; in the first check valve, the first valve core is provided with a spring pointing outwardly in its conducting direction, and in the second check valve, the second valve core is provided with a spring pointing outwardly in its conducting direction.

35. The liquid guide structure of the liquid storage box according to claim 34, **characterized in that** a push pin is provided on the first valve core, the push pin extends in a direction pointing to the second valve core; the push pin of the first valve core abuts and pushes the second valve core;
preferably, a plugging groove is provided at a position opposite to the second valve core and the push pin, the push pin is inserted into the plugging groove, and embedded with the plugging groove.

36. The liquid guide structure of the liquid storage box according to claim 35, **characterized in that** the first valve core is provided as a valve structure having a hollow space inside, and the push pin is embedded in the hollow space of the first valve core.

37. The liquid guide structure of the liquid storage box according to any one of claims 34-36, **characterized in that** the output channel of the liquid storage box is surrounded by a circular mounting sleeve, an end of the mounting sleeve away from the liquid-conducting plug unit constitutes a shell of the second check valve, the second valve core and the spring are set inside the shell, and the shell is set with a second opening at an end near the liquid-conducting plug unit; the mounting sleeve is set with a hollow inner cavity near the end of the liquid-conducting plug unit, and the first check valve can be correspondingly inserted in the hollow inner cavity; the first valve core can be inserted in the second opening.

38. The liquid guide structure of the liquid storage box according to claim 37, **characterized in that** a mounting groove projecting toward outside of the liquid storage box is provided at the opening of the liquid storage box, and the mounting sleeve is embedded in the mounting groove; a flap bent toward the outside of the mounting groove is provided at an end of the mounting sleeve proximate to the liquid-conducting plug unit, the mounting groove is snap-embedded in a gap between the flap and a body of the mounting sleeve, and the flap extends to a bottom end of the mounting groove proximate to the opening of the liquid storage box.

39. The liquid guide structure for the liquid storage box according to claim 38, **characterized in that** the mounting groove is embedded with a liquid guide groove, and the liquid guide groove extends along an axial direction of the liquid storage box; the liquid guide groove comprises an internally hollow mounting cavity, and the mounting sleeve is embedded in the mounting cavity; the liquid guide groove also comprises an internally hollow, additive-guiding flow diversion tube, which is connected to the mounting cavity.

40. The liquid guide structure for the liquid storage box according to claim 38, **characterized in that** the mounting sleeve is embedded in the mounting cavity, a gap is formed between the mounting cavity and the mounting sleeve, and a guide structure is provided in the gap except for a slot in a middle of the gap where a part of the structure of the first check valve can be embedded; the mounting cavity and the diversion tube are both cavity structures with openings at ends and hollow interiors, and the opening of the mounting cavity near the first check valve is connected to the opening of one end of the diversion tube.
